(19) Europäisches Patentamt
European Patent Office
Office européen des brevets

(11) **EP 4 753 140 A1**

(12) **EUROPEAN PATENT APPLICATION**
published in accordance with Art. 153(4) EPC

(43) Date of publication:
**03.06.2026 Bulletin 2026/23**

(21) Application number: **24845145.2**

(22) Date of filing: **13.05.2024**

(51) International Patent Classification (IPC):
*H02P 8/34* (2006.01)     *F16K 31/04* (2006.01)

(52) Cooperative Patent Classification (CPC):
**F16K 31/04; H02P 8/34**

(86) International application number:
**PCT/JP2024/017644**

(87) International publication number:
**WO 2025/022761 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 JP 2023122305**

(71) Applicant: **Fujikoki Corporation
Tokyo 158-0082 (JP)**

(72) Inventors:
• **YAMADA Kento
Tokyo 158-0082 (JP)**
• **WATANABE Takayuki
Tokyo 158-0082 (JP)**

(74) Representative: **Ter Meer Steinmeister & Partner
Patentanwälte mbB
Nymphenburger Straße 4
80335 München (DE)**

(54) **ELECTRIC VALVE CONTROL DEVICE, ELECTRIC VALVE DEVICE, AND ELECTRIC VALVE STATE DETERMINATION METHOD**

(57)     [Problem] To provide a motor-operated valve control device, a motor-operated valve device including a motor-operated valve control device, and a method for determining a state of a motor-operated valve, each of which is capable of determining at an appropriate timing whether the rotation of a rotor of a stepping motor is restricted.

[Solution] A driving current for rotating a rotor 41 is controlled by a pulse-width modulation method and is supplied to a coil of a stator 60 of a stepping motor 66. A motor-operated valve control device 70 includes a low-pass filter having a cutoff frequency lower than a pulse-width modulation frequency used in the pulse-width modulation method, and allows a voltage component in a voltage generated in the coil to pass, the voltage component having a frequency lower than the cutoff frequency. The motor-operated valve control device 70 includes a computer configured to determine, using the voltage component passing through the low-pass filter, whether a motor-operated valve 5 is in a rotation restricted state in which the rotation of the rotor 41 is restricted.

FIG.2

**Description**

Technical Field

The present invention relates to a motor-operated valve control device, a motor-operated valve device including a motor-operated valve control device, and a method for determining a state of a motor-operated valve.

Background Art

Patent Literature 1 discloses an example of a motor-operated valve according to the related art. The motor-operated valve is, for example, incorporated in a refrigeration cycle system of an air conditioner. The motor-operated valve includes a valve body, a valve member, and a stepping motor for moving the valve member. The stepping motor includes a rotor and a stator. The stator includes a coil. The rotor rotates in response to a pulse input to the stepping motor. Specifically, the rotor rotates when a driving current corresponding to the pulse is supplied to the stator of the stepping motor. The valve member moves along with the rotation of the rotor. When the rotor is at a reference position, a movable stopper rotating with the rotor is in contact with a fixed stopper fixed to the valve body, thereby restricting the rotor from rotating in a first direction.

The motor-operated valve is controlled by a motor-operated valve control device. In an initialization operation, the motor-operated valve control device inputs pulses to the stepping motor to rotate the rotor in the first direction and to position the rotor at the reference position. A sufficient number of pulses are input to the stepping motor to bring the movable stopper into contact with the fixed stopper. This number is hereinafter referred to as an "initialization number". When the rotor rotates in the first direction and the movable stopper comes into contact with the fixed stopper, the rotor is positioned at the reference position.

The motor-operated valve control device inputs pulses to the stepping motor until the number of pulses input to the stepping motor reaches the initialization number. Thus, the motor-operated valve control device may continue to input pulses after the rotor is positioned at the reference position, resulting in a long duration of the initialization operation. Additionally, when pulses are input to the stepping motor after the rotor is positioned at the reference position, the movable stopper repeatedly collides with the fixed stopper, thereby generating noise. Especially when the rotor is near the reference position immediately before the initialization operation starts, the noise lasts a long time.

The waveform of a voltage generated in the stator by the rotation of the rotor (a voltage electromagnetically induced in the stator) during the initialization operation differs between before the rotation of the rotor is restricted and after the rotation of the rotor is restricted. A motor-operated valve control device disclosed in Patent Literature 2 obtains a voltage generated in a stator by the rotation of a rotor and determines whether the rotation of the rotor in a first direction is restricted, based on a degree of difference between a waveform of the voltage and a reference waveform of the voltage. When the motor-operated valve control device determines that the rotation of the rotor in the first direction is restricted, the motor-operated valve control device stops the rotation of the rotor. With this configuration, the motor-operated valve control device stops the rotation of the rotor immediately after the rotor is positioned at a reference position, thereby suppressing prolonged noise.

Citation List

Patent Literature

Patent Literature 1: WO2019/130928
Patent Literature 2: Japanese Patent No. 7254400

Summary of Invention

Technical Problem

The stator includes an A-phase stator and a B-phase stator. When driving currents are supplied to both the A-phase and B-phase stators, the voltage generated in the A-phase stator includes a voltage component resulting from the driving current and a voltage component generated by the rotation of the rotor. The voltage generated in the B-phase stator also includes a voltage component resulting from the driving current and a voltage component generated by the rotation of the rotor. In a configuration in which the driving current is controlled by a pulse-width modulation method, the voltage component resulting from the driving current has a relatively high frequency and a relatively large amplitude, and masks the voltage component generated by the rotation of the rotor.

Consequently, when the driving current is supplied only to one of the A-phase and B-phase stators, the motor-operated valve control device disclosed in Patent Literature 2 determines, based on the voltage generated in the other stator to which the driving current is not supplied, whether the rotation of the rotor in the first direction is restricted. When the driving currents are supplied to both the A-phase and B-phase stators, the motor-operated valve control device cannot determine whether the rotation of the rotor in the first direction is restricted. Therefore, the motor-operated valve control device may be unable to determine, at the timing when the rotation of the rotor in the first direction is actually restricted, whether the rotation of the rotor in the first direction is restricted.

Accordingly, it is an object of the present invention to provide a motor-operated valve control device, a motor-operated valve device including a motor-operated valve control device, and a method for determining a state of a motor-operated valve, each of which is capable of determining, at an appropriate timing, whether the rotation of a rotor of a stepping motor is restricted.

Solution to Problem

To achieve the object above, a motor-operated valve control device according to an aspect of the present invention is provided for controlling a motor-operated valve. The motor-operated valve includes a valve body that has a valve port, a stepping motor that includes a rotor and a stator, and a valve member that moves relative to the valve port when the rotor rotates. The motor-operated valve control device includes a low-pass filter and a processor. A driving current for rotating the rotor is controlled by a pulse-width modulation method and is supplied to a coil of the stator. The low-pass filter has a cutoff frequency lower than a pulse-width modulation frequency used in the pulse-width modulation method, and allows a voltage component in a voltage generated in the coil to pass, the voltage component having a frequency lower than the cutoff frequency. The processor is configured to determine, using the voltage component passing through the low-pass filter, whether the motor-operated valve is in a rotation restricted state in which rotation of the rotor is restricted.

In the present invention, preferably, the processor is configured to determine, based on a degree of difference between a waveform of the voltage component and a reference waveform of the voltage component, whether the motor-operated valve is in the rotation restricted state.

In the present invention, preferably, a motor driver is connected to the coil. Preferably, when pulses having sequential numbers are repeatedly input to the motor driver in sequence, the motor driver supplies the driving current corresponding to the pulses to the coil to rotate the rotor. Preferably, the processor is configured to: start inputting the pulses to the motor driver; obtain the voltage component when the driving current corresponding to one of the pulses input to the motor driver is supplied to the coil, the one pulse being hereinafter referred to as a "determination target pulse", and determine, using the voltage component, whether the motor-operated valve is in the rotation restricted state; and on determination that the motor-operated valve is in the rotation restricted state, stop inputting the pulses before inputting a pulse immediately following the determination target pulse.

In the present invention, preferably, a motor driver is connected to the coil. Preferably, when pulses having sequential numbers are repeatedly input to the motor driver in sequence, the motor driver supplies the driving current corresponding to the pulses to the coil to rotate the rotor. Preferably, the processor is configured to: start inputting the pulses to the motor driver; obtain the voltage component when the driving current corresponding to one of the pulses input to the motor driver is supplied to the coil, the one pulse being hereinafter referred to as a "determination target pulse", and determine, during an input period of a pulse immediately following the determination target pulse, whether the motor-operated valve is in the rotation restricted state, using the voltage component; and on determination that the motor-operated valve is in the rotation restricted state, input, following the pulse immediately following the determination target pulse, a pulse having a number identical to the number for the determination target pulse to the motor driver, and stop inputting the pulses.

In the present invention, preferably, a motor driver is connected to the coil. Preferably, when pulses having sequential numbers are repeatedly input to the motor driver in sequence, the motor driver supplies the driving current corresponding to the pulses to the coil to rotate the rotor. Preferably, the processor is configured to: start inputting the pulses to the motor driver; obtain the voltage component when the driving current corresponding to one of the pulses input to the motor driver is supplied to the coil, the one pulse being hereinafter referred to as a "determination target pulse", and determine, during an input period of a pulse immediately following the determination target pulse, whether the motor-operated valve is in the rotation restricted state, using the voltage component; and on determination that the motor-operated valve is in the rotation restricted state, input, following the pulse immediately following the determination target pulse, the pulses to the motor driver in sequence until inputting a pulse having a number identical to the number for the determination target pulse to the motor driver, and stop inputting the pulses.

In the present invention, preferably, the cutoff frequency is set based on the pulse-width modulation frequency.

To achieve the object above, a motor-operated valve device according to another aspect of the present invention includes the motor-operated valve and the motor-operated valve control device.

To achieve the object above, a method according to another aspect of the present invention is provided for determining a state of a motor-operated valve. The motor-operated valve includes a valve body that has a valve port, a stepping motor that includes a rotor and a stator, and a valve member that moves relative to the valve port when the rotor rotates. The method includes: supplying a driving current for rotating the rotor to a coil of the stator, the driving current being controlled by a pulse-width modulation method; inputting a voltage generated in the coil to a low-pass filter having a cutoff frequency lower than a pulse-width modulation frequency used in the pulse-width modulation method, the low-pass filter allowing a voltage component in the voltage generated in the coil to pass, the voltage component having a frequency lower than the cutoff frequency; and determining, using the voltage component passing through the low-pass filter, whether the motor-operated valve is in a rotation restricted state in which rotation of the rotor is restricted.

Advantageous Effects of Invention

According to the present invention, the stepping motor includes the rotor and the stator, and the driving current for rotating the rotor is controlled by the pulse-width modulation method and is supplied to the coil of the stator. Whether the motor-operated valve is in the rotation restricted state in which the rotation of the rotor is restricted is determined using the voltage component having a frequency lower than the cutoff frequency in the voltage generated in the coil. With this configuration, a voltage component resulting from the driving current and having a relatively high frequency can be removed from the voltage generated in the coil, thereby inhibiting a voltage component generated by the rotation of the rotor from being masked by the voltage component resulting from the driving current. Consequently, even when the driving current is supplied to the coil, whether the motor-operated valve is in the rotation restricted state can be determined based on the voltage generated in the coil. Therefore, whether the rotation of the rotor of the stepping motor is restricted can be determined at an appropriate timing.

Brief Description of Drawings

[Fig. 1] Fig. 1 is a block diagram of an air conditioning system including a motor-operated valve device.

[Fig. 2] Fig. 2 is a sectional view of the motor-operated valve device.

[Fig. 3] Fig. 3 is a diagram illustrating a valve stem holder of the motor-operated valve device.

[Fig. 4] Fig. 4 is a side view of a guide bush of the motor-operated valve device.

[Fig. 5] Fig. 5 is a diagram illustrating a stopper member of the motor-operated valve device.

[Fig. 6] Fig. 6 is a plan view of the valve stem holder, the stopper member, a rotor, and a stator of the motor-operated valve device.

[Fig. 7] Fig. 7 is a diagram illustrating a computer, a motor driver, and a low-pass filter that are included in a motor-operated valve control device of the motor-operated valve device, and a stepping motor.

[Fig. 8] Fig. 8 is a diagram illustrating an example of a relationship between a step signal and a direction signal that are input to the motor driver, and pulses that are input to the stepping motor.

[Fig. 9] Fig. 9 is a diagram illustrating an example of correspondence between pulses and A-phase and B-phase current target values.

[Fig. 10] Fig. 10 is a diagram illustrating an example of waveforms of A-phase and B-phase currents.

[Fig. 11] Fig. 11 is a diagram schematically illustrating a positional relationship between magnetic poles of the rotor and pole teeth of the stator (when pulse P[1] is input).

[Fig. 12] Fig. 12 is a diagram schematically illustrating the positional relationship between the magnetic poles of the rotor and the pole teeth of the stator (when pulse P[2] is input).

[Fig. 13] Fig. 13 is a diagram schematically illustrating the positional relationship between the magnetic poles of the rotor and the pole teeth of the stator (when pulse P[3] is input).

[Fig. 14] Fig. 14 is a diagram schematically illustrating the positional relationship between the magnetic poles of the rotor and the pole teeth of the stator (when pulse P[4] is input).

[Fig. 15] Fig. 15 is a diagram schematically illustrating the positional relationship between the magnetic poles of the rotor and the pole teeth of the stator (when pulse P[5] is input).

[Fig. 16] Fig. 16 is a diagram schematically illustrating the positional relationship between the magnetic poles of the rotor and the pole teeth of the stator (when pulse P[6] is input).

[Fig. 17] Fig. 17 is a diagram schematically illustrating the positional relationship between the magnetic poles of the rotor and the pole teeth of the stator (when pulse P[7] is input).

[Fig. 18] Fig. 18 is a diagram schematically illustrating the positional relationship between the magnetic poles of the rotor and pole teeth of the stator (when pulse P[8] is input).

[Fig. 19] Fig. 19 is a diagram illustrating examples of waveforms of voltages generated in coils of the stator.

[Fig. 20] Fig. 20 is a diagram illustrating examples of waveforms of voltage components having frequencies lower than a cutoff frequency in the voltages illustrated in Fig. 19.

[Fig. 21] Fig. 21 is a diagram illustrating examples of waveforms of voltage components having frequencies lower than the cutoff frequency in voltages generated in the coils of the stator (in a state in which the rotation of the rotor is permitted).

[Fig. 22] Fig. 22 is a diagram illustrating examples of waveforms of voltage components having frequencies lower than the cutoff frequency in voltages generated in the coils of the stator (in a state in which the rotation of the rotor is restricted).

[Fig. 23] Fig. 23 is a diagram illustrating an example of the rotational angle of the rotor.

[Fig. 24] Fig. 24 is a diagram comparing waveforms of voltage components having frequencies lower than the cutoff frequency in voltages generated in the coils of the stator.

[Fig. 25] Fig. 25 is a diagram illustrating an example of a data table relating to a reference waveform of a voltage component having a frequency lower than the cutoff frequency in a voltage generated in the coil of the stator.

[Fig. 26] Fig. 26 is a diagram illustrating an example of a waveform of a voltage component having a frequency lower than the cutoff frequency in a voltage generated in the coil of the stator, and a reference waveform of the voltage component.

[Fig. 27] Fig. 27 is a flowchart illustrating an example of an operation of the motor-operated valve control device (Operation Example 1).

[Fig. 28] Fig. 28 is a flowchart illustrating another example of an operation of the motor-operated valve control device (Operation Examples 2 and 3).

[Fig. 29] Fig. 29 is a diagram illustrating an example of the rotational angle of the rotor (in Micro-step Mode 1).

[Fig. 30] Fig. 30 is a diagram comparing waveforms of voltage components having frequencies lower than the cutoff frequency in voltages generated in the coils of the stator (in Micro-step Mode 1).

[Fig. 31] Fig. 31 is a diagram illustrating an example of the rotational angle of the rotor (in Micro-step Mode 2).

[Fig. 32] Fig. 32 is a diagram comparing waveforms of voltage components having frequencies lower than the cutoff frequency in voltages generated in the coils of the stator (in Micro-step Mode 2).

Description of Embodiments

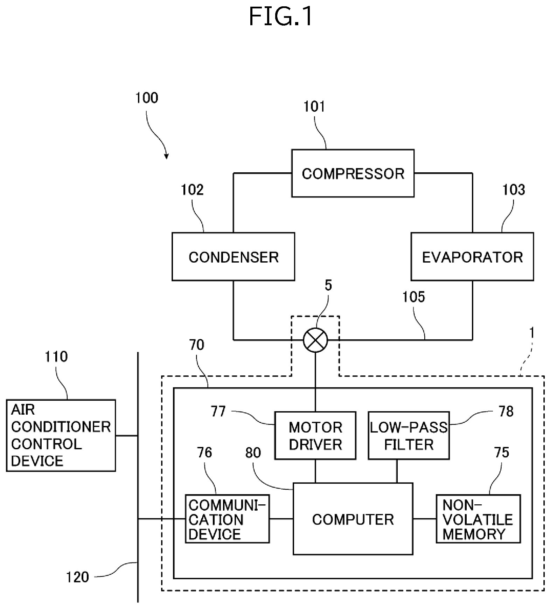

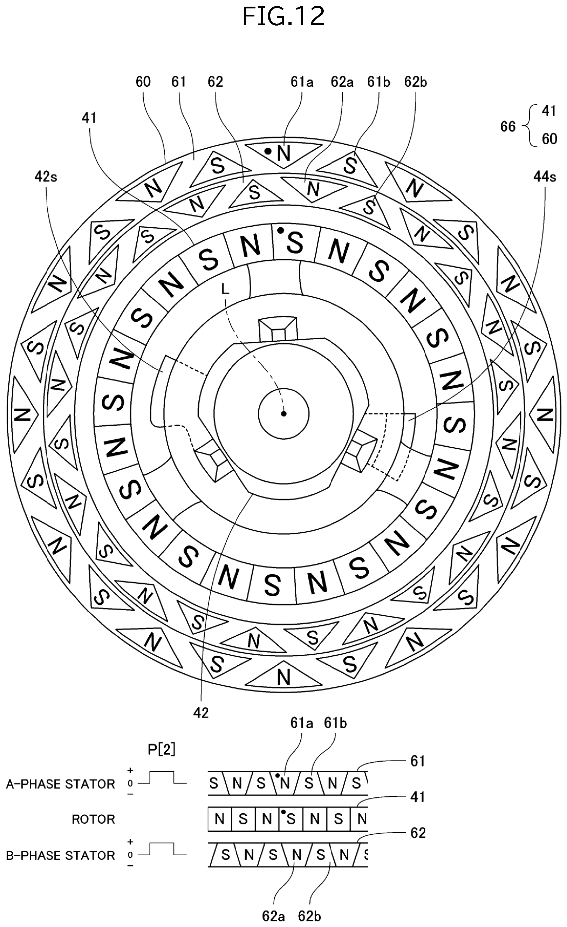

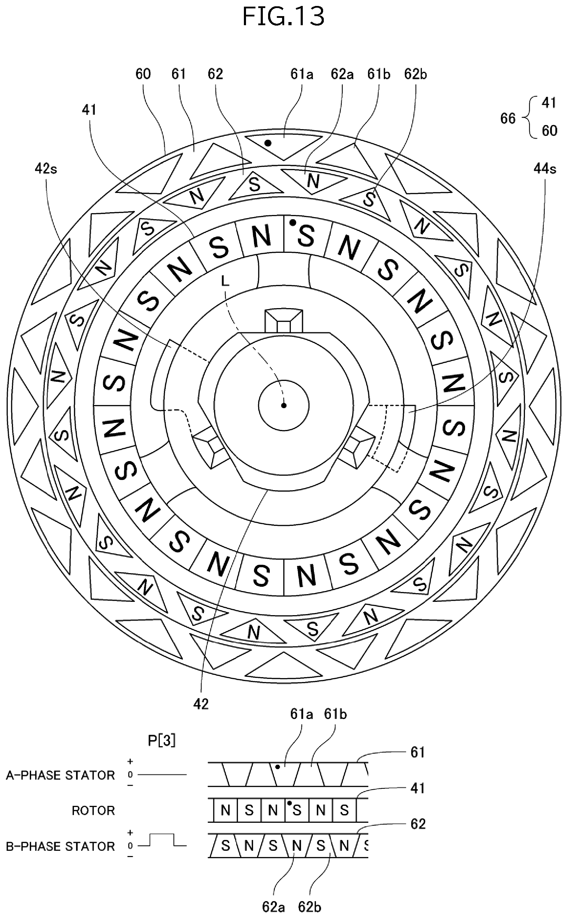

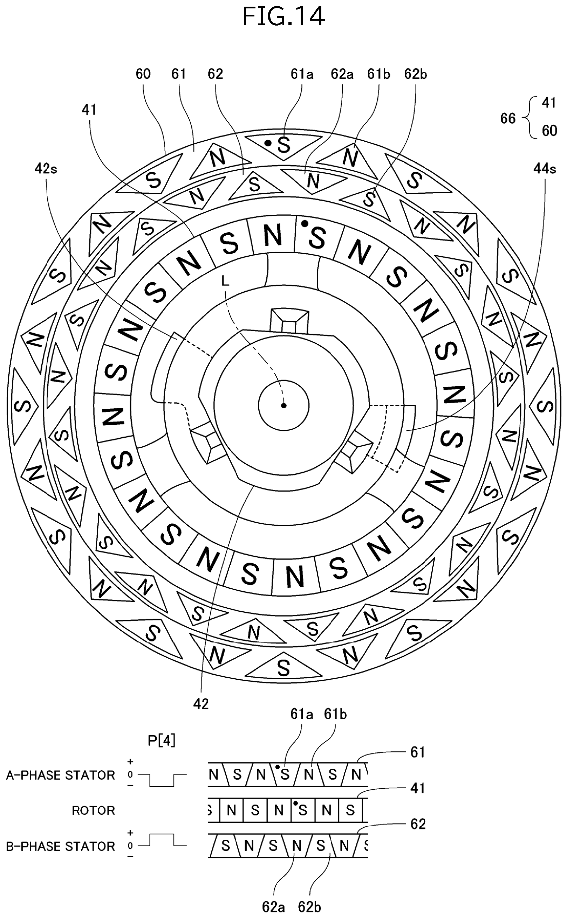

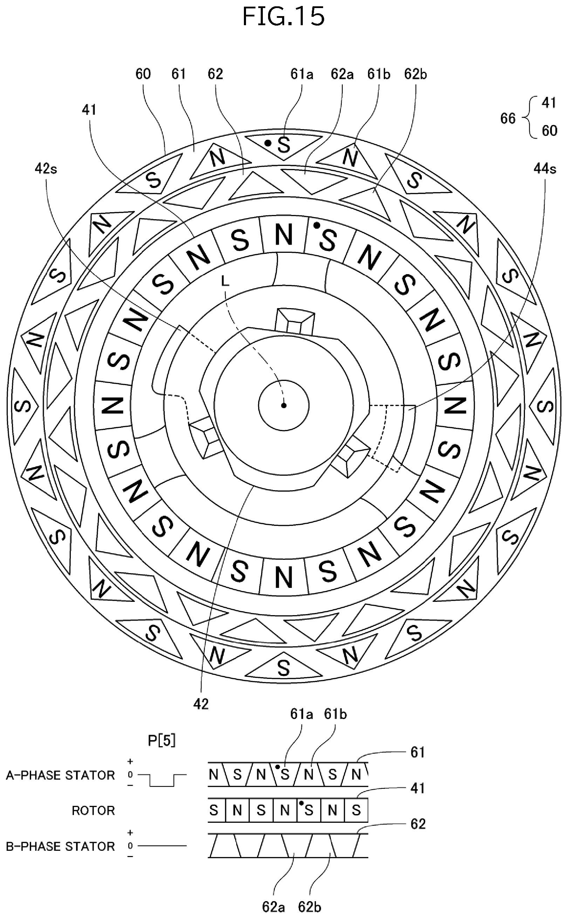

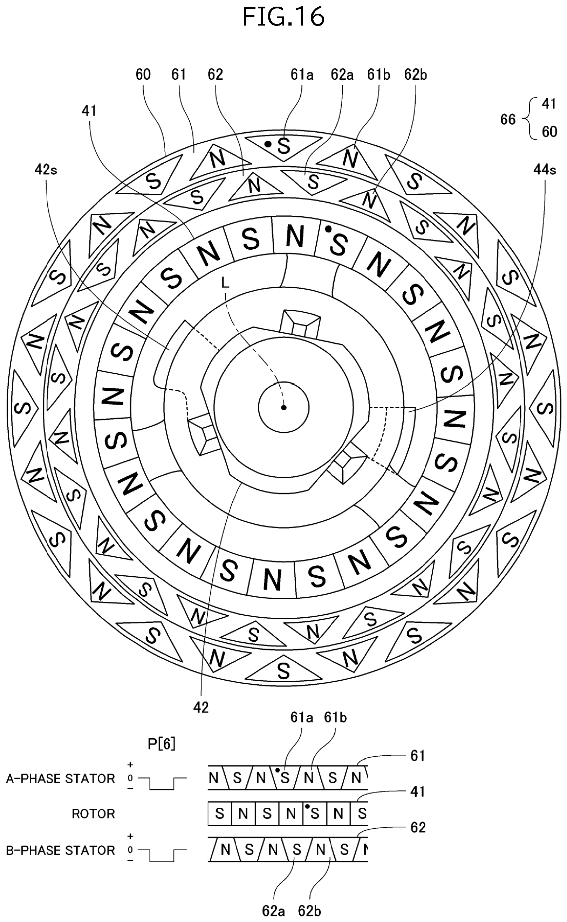

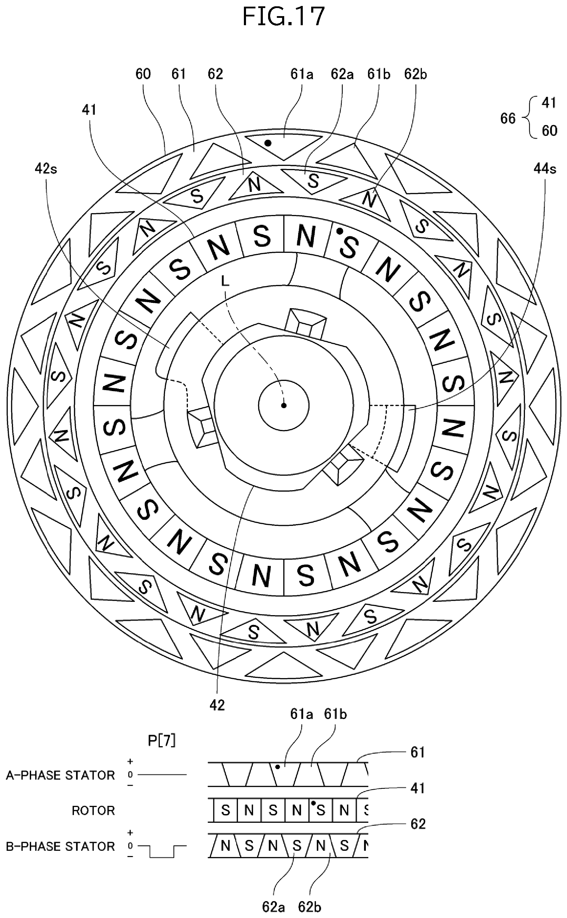

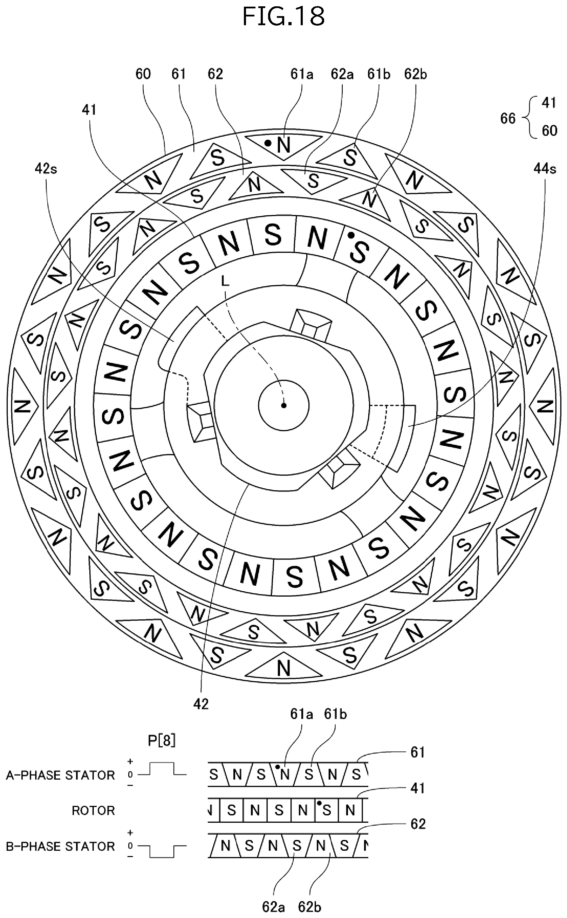

A motor-operated valve device according to an embodiment of the present invention is described below with reference to Figs. 1 to 28.

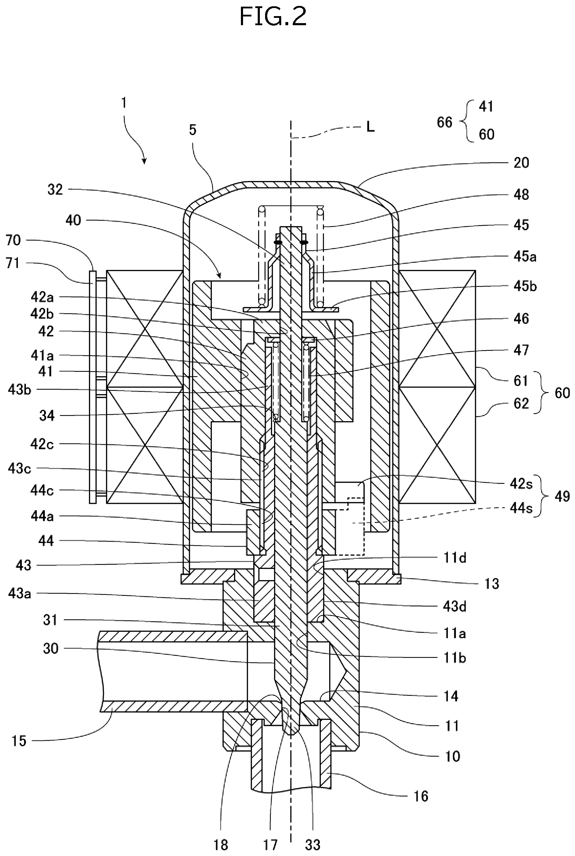

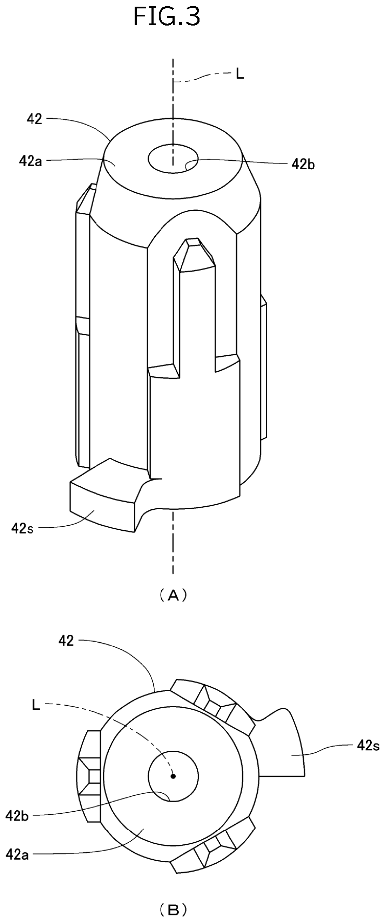

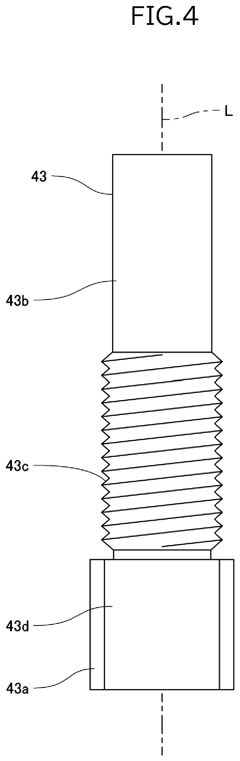

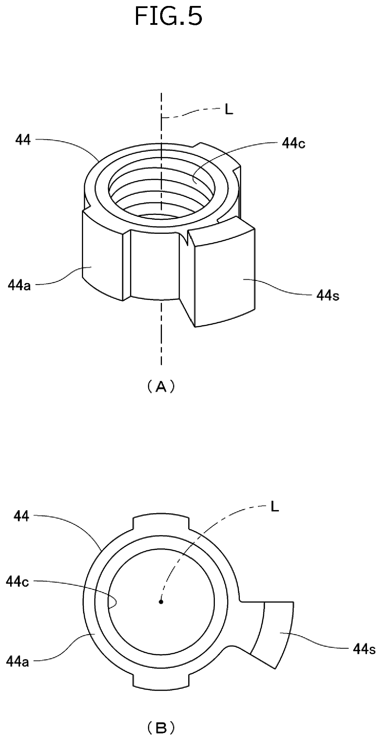

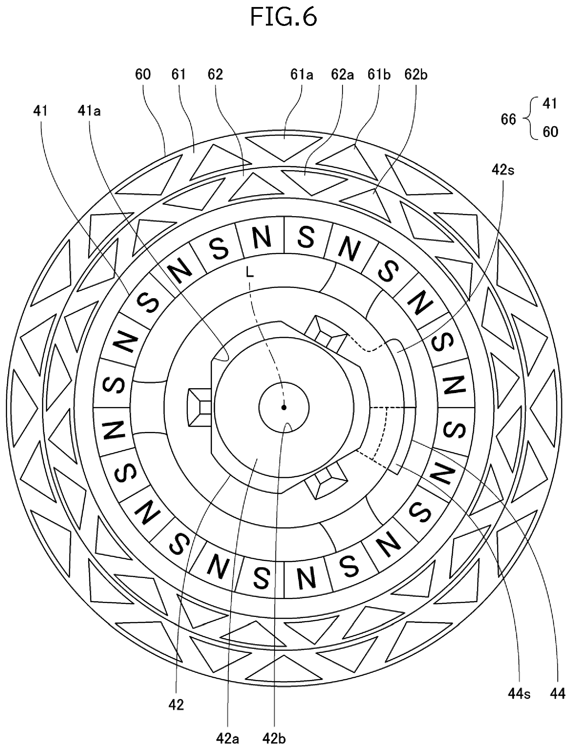

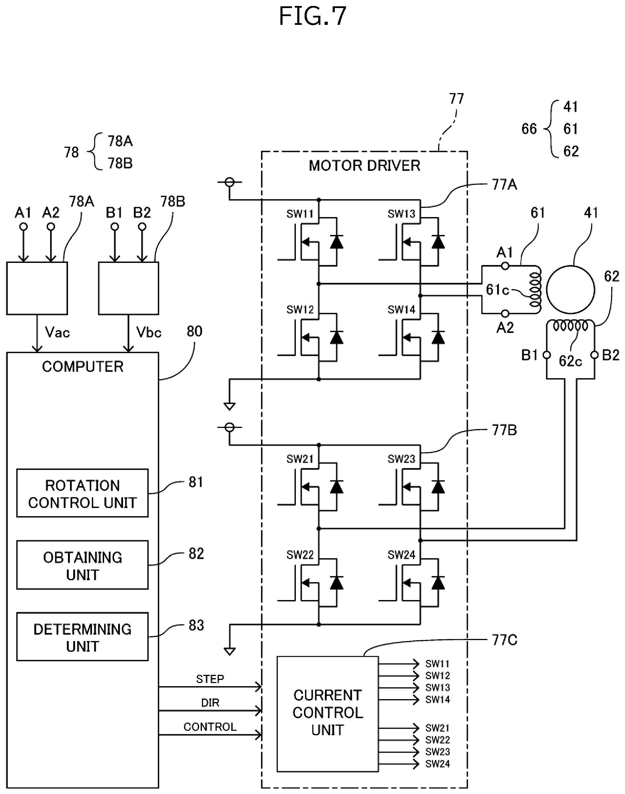

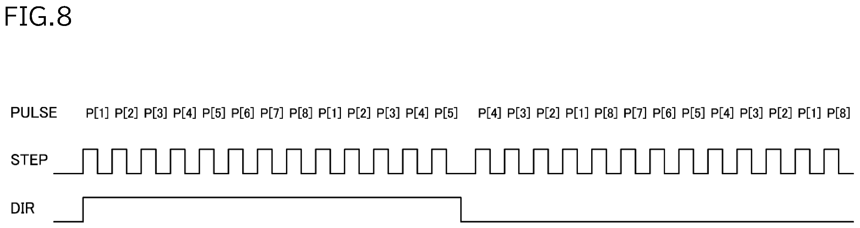

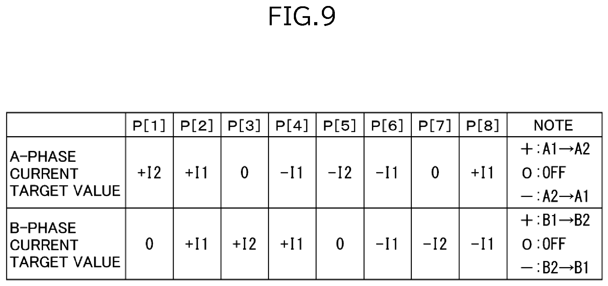

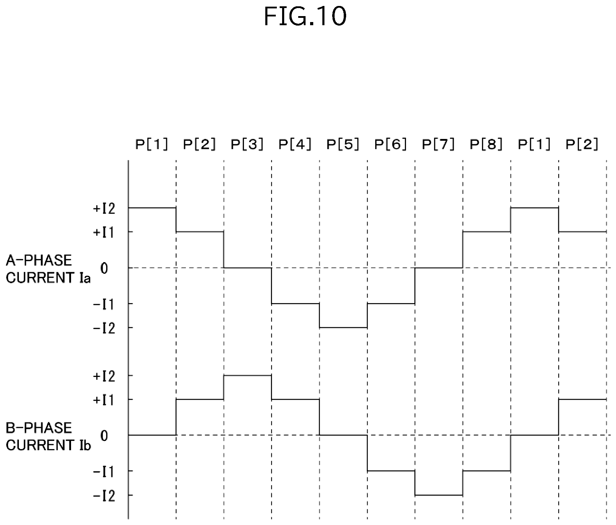

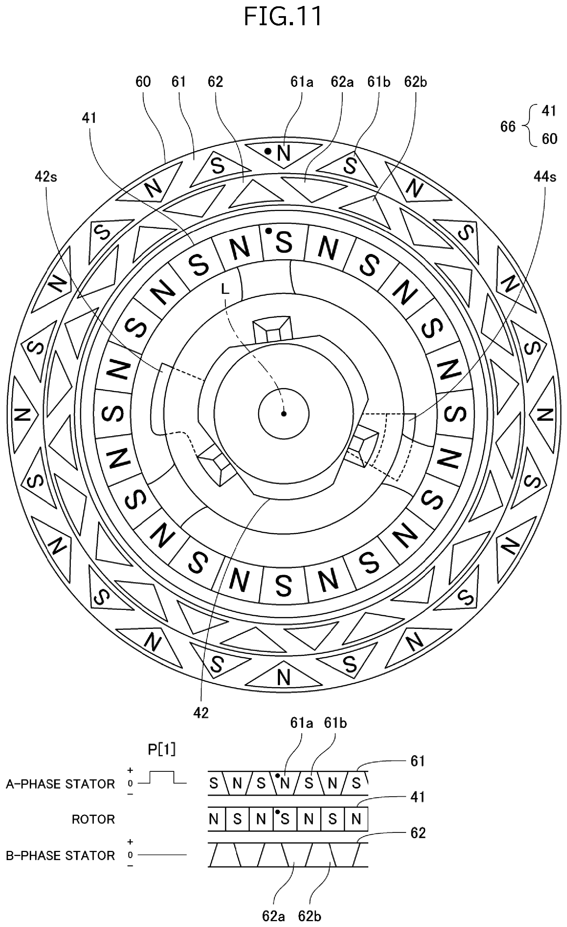

Fig. 1 is a block diagram of an air conditioning system including a motor-operated valve device. Fig. 2 is a sectional view of the motor-operated valve device. Fig. 3 is a diagram illustrating a valve stem holder of the motor-operated valve device. Fig. 3A is a perspective view of the valve stem holder, and Fig. 3B is a plan view of the valve stem holder. Fig. 4 is a side view of a guide bush of the motor-operated valve device. Fig. 5 is a diagram illustrating a stopper member of the motor-operated valve device. Fig. 5A is a perspective view of the stopper member, and Fig. 5B is a plan view of the stopper member. Fig. 6 is a plan view of the valve stem holder, the stopper member, a rotor, and a stator of the motor-operated valve device. Fig. 6 schematically illustrates magnetic poles of the rotor and the stator. Fig. 7 is a diagram illustrating a computer, a motor driver, and a low-pass filter that are included in a motor-operated valve control device of the motor-operated valve device, and a stepping motor. Fig. 8 is a diagram illustrating an example of a relationship between a step signal and a direction signal that are input to the motor driver, and pulses that are input to the stepping motor. Fig. 9 is a diagram illustrating an example of correspondence between pulses and A-phase and B-phase current target values. Fig. 10 is a diagram illustrating an example of waveforms of A-phase and B-phase currents. Figs. 11 to 18 are diagrams schematically illustrating a positional relationship between the magnetic poles of the rotor and pole teeth of the stator.

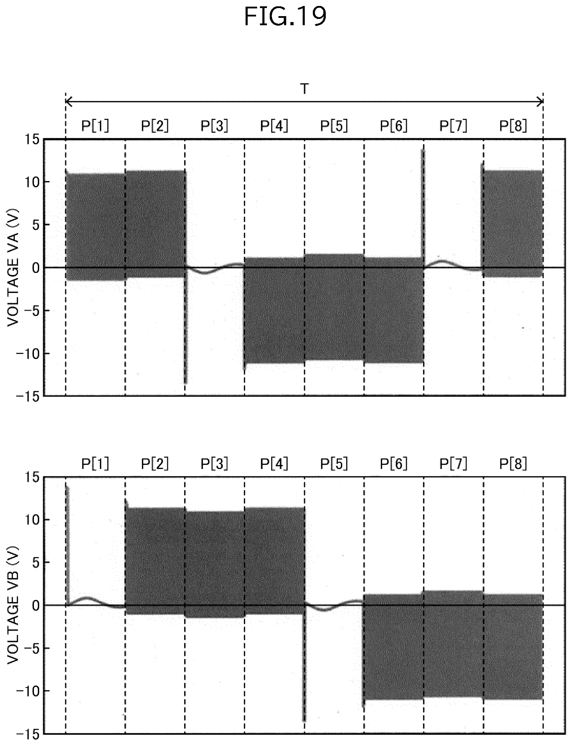

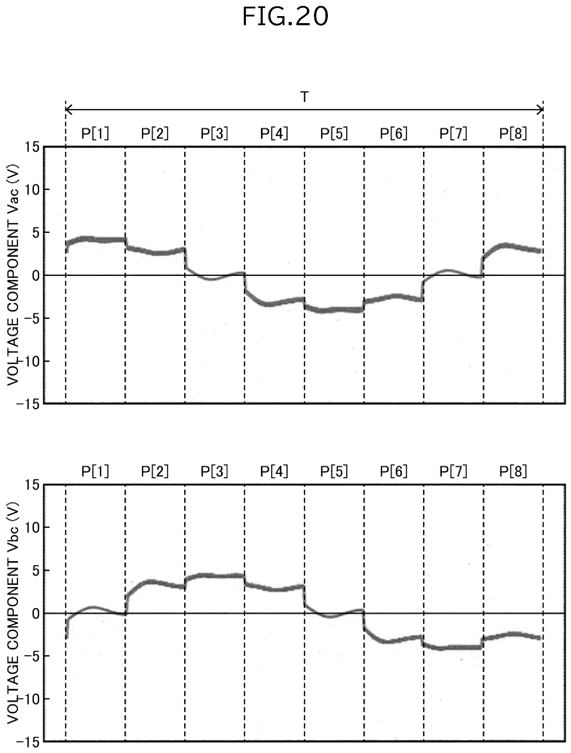

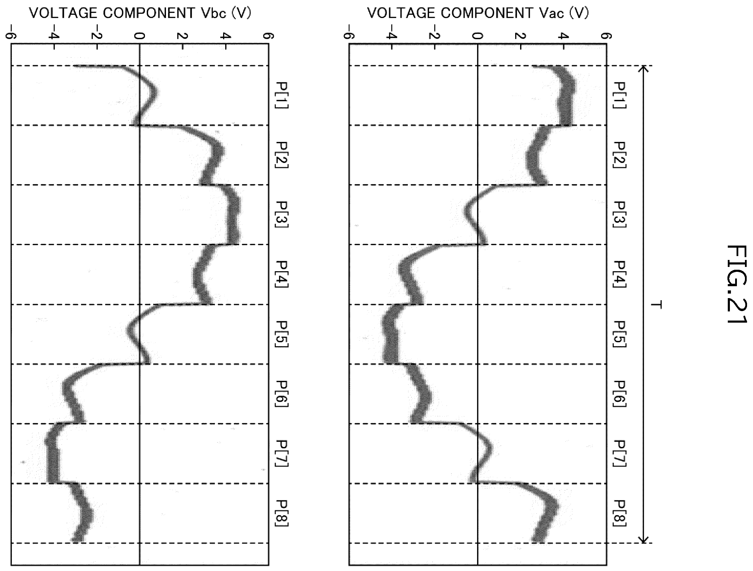

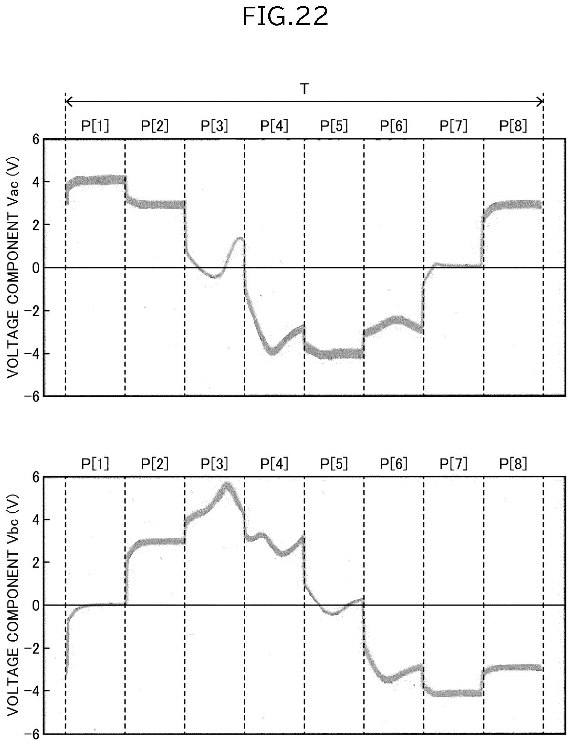

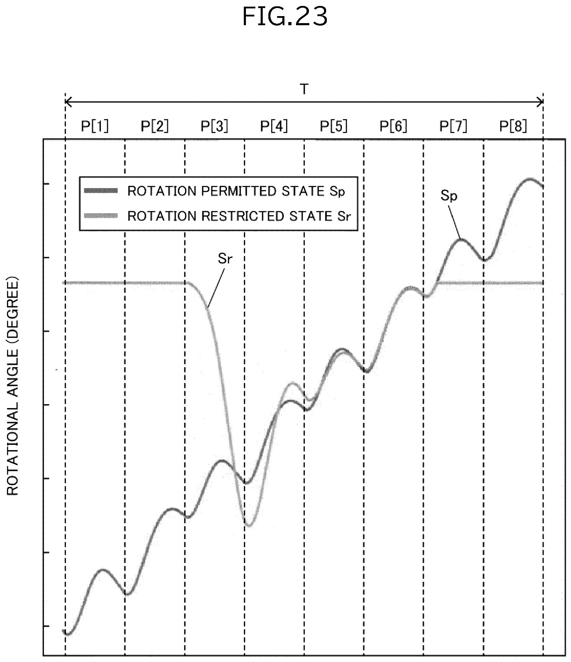

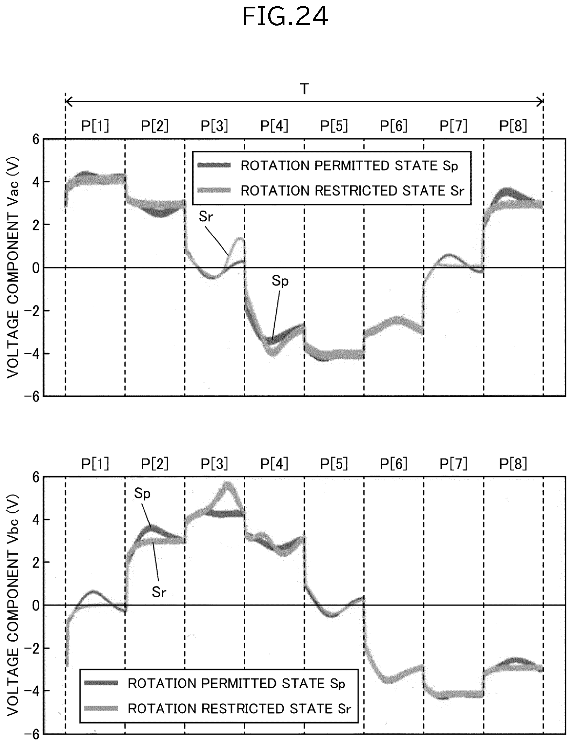

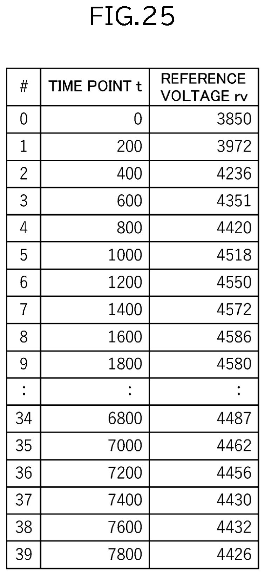

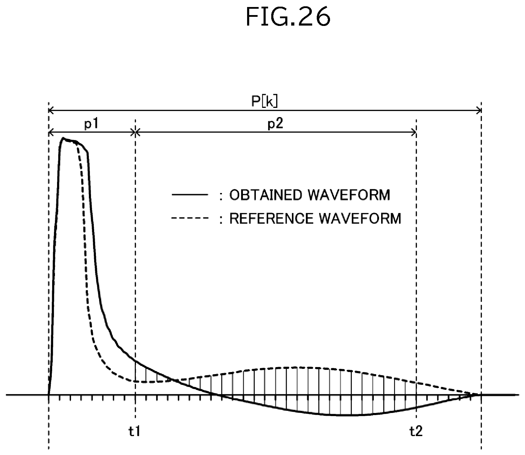

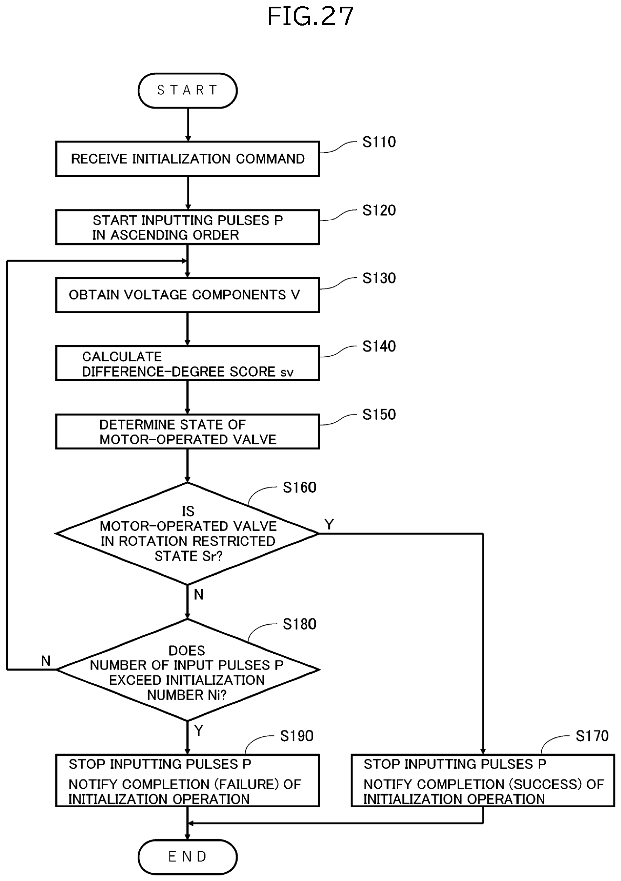

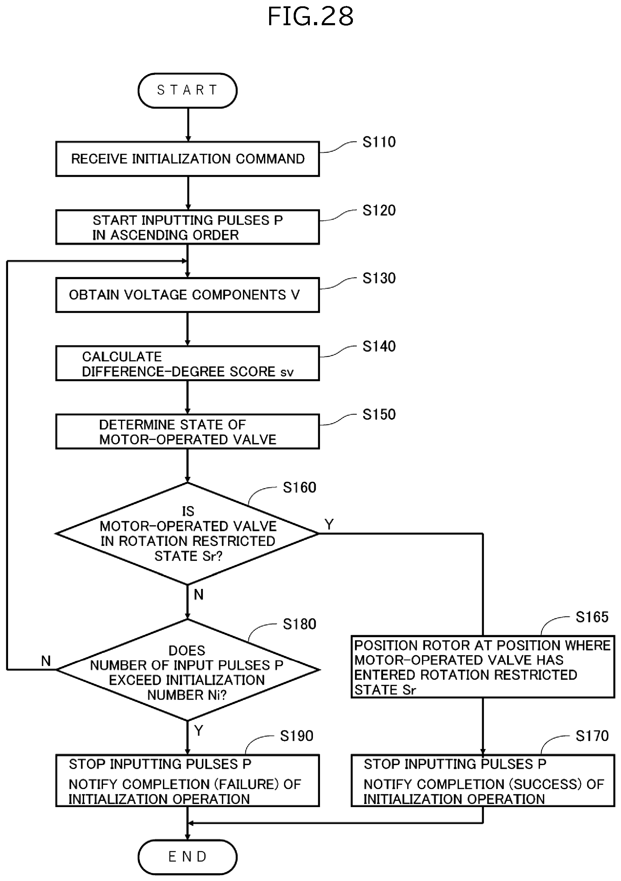

Fig. 19 is a diagram illustrating examples of waveforms of voltages generated in coils of the stator. Fig. 20 is a diagram illustrating examples of waveforms of voltage components that have frequencies lower than a cutoff frequency and that have passed through the low-pass filter, in the voltages illustrated in Fig. 19. Figs. 21 and 22 are diagrams illustrating examples of waveforms of voltage components having frequencies lower than the cutoff frequency in voltages generated in the coils of the stator. Fig. 21 illustrates waveforms of the voltage components in a state in which the rotation of the rotor is permitted. Fig. 22 illustrates waveforms of the voltage components in a state in which the rotation of the rotor is restricted. Fig. 23 is a diagram illustrating an example of the rotational angle of the rotor. Fig. 23 illustrates changes in the rotational angle of the rotor in response to pulses being input. Fig. 24 is a diagram comparing waveforms of voltage components having frequencies lower than the cutoff frequency in voltages generated in the coils of the stator. Fig. 24 is a diagram comparing the waveforms of the voltage components in the state in which the rotation of the rotor is permitted with those in the state in which the rotation of the rotor is restricted. Fig. 25 is a diagram illustrating an example of a data table relating to a reference waveform of a voltage component having a frequency lower than the cutoff frequency in a voltage generated in the coil of the stator. Fig. 26 is a diagram illustrating an example of a waveform of a voltage component having a frequency lower than the cutoff frequency in a voltage generated in the coil of the stator, and a reference waveform of the voltage component. Figs. 27 and 28 are flowcharts illustrating examples of operation of the motor-operated valve control device. Fig. 27 illustrates Operation Example 1, and Fig. 28 illustrates Operation Examples 2 and 3. In Figs. 19 to 22, 24, and 26, the horizontal axis represents time and the vertical axis represents voltage. In Fig. 23, the horizontal axis represents time and the vertical axis represents rotational angle.

A motor-operated valve device 1 according to the embodiment is used as, for example, a flow control valve for controlling the flow rate of refrigerant as fluid in an air conditioning system.

Fig. 1 illustrates an example of an air conditioning system 100 mounted in a vehicle. The air conditioning system 100 includes a compressor 101, a condenser 102, the motor-operated valve device 1 (including a motor-operated valve 5), and an evaporator 103, which are connected in this order by a pipe 105. The motor-operated valve device 1 functions as an expansion valve. The air conditioning system 100 includes an air conditioner control device 110. The air conditioner control device 110 is connected to the motor-operated valve device 1 (including a motor-operated valve control device 70) and can communicate with the motor-operated valve device 1. The air conditioner control device 110 uses the motor-operated valve device 1 to control the flow rate of refrigerant flowing through the pipe 105.

As illustrated in Fig. 2, the motor-operated valve device 1 includes the motor-operated valve 5 and the motor-operated valve control device 70.

The motor-operated valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14, a valve port 17, and a valve seat 18. A first conduit 15 and a second conduit 16 are joined to the body member 11. The first conduit 15 extends in a direction perpendicular to an axis L, which corresponds to the left-and-right direction in Fig. 2, and is connected to the valve chamber 14. The second conduit 16 extends in a direction of the axis L, which corresponds to the up-and-down direction in Fig. 2, and is connected to the valve chamber 14 via the valve port 17. The valve port 17 is enclosed by the valve seat 18, which has a circular annular shape, in the valve chamber 14. The body member 11 has a fitting hole 11a, which has a circular shape. The fitting hole 11a is provided in the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has a circular annular plate-like shape. The inner peripheral edge of the connection member 13 is joined to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is joined to the outer peripheral edge of the connection member 13.

The valve member 30 includes a first stem portion 31, a second stem portion 32, and a plug portion 33. The first stem portion 31 and the second stem portion 32 each have a circular columnar shape. The diameter of the second stem portion 32 is smaller than the diameter of the first stem portion 31. The second stem portion 32 is connected to the upper end of the first stem portion 31 and is coaxial with the first stem portion 31. The valve member 30 has a step portion 34, which is a circular annular plane facing upward. The step portion 34 is provided in the part where the second stem portion 32 is connected to the first stem portion 31. The plug portion 33 has a substantially conical shape with a diameter decreasing from top to bottom. The plug portion 33 is connected to the lower end of the first stem portion 31 and is coaxial with the first stem portion 31. The plug portion 33 is disposed in the valve port 17. A variable throttle passage is formed between the plug portion 33 and the valve port 17. The plug portion 33 faces the valve port 17 and the valve seat 18. The valve port 17 is closed when the plug portion 33 is in contact with the valve seat 18. The valve port 17 is open when the plug portion 33 is separated from the valve seat 18.

The driving mechanism 40 moves the valve member 30 in the up-and-down direction (the direction of the axis L). The movement of the valve member 30 opens and closes the valve port 17. The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable relative to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged one after another at regular angular intervals in the circumferential direction. The rotor 41 has, for example, twelve N poles and twelve S poles. The angle between the N poles and the S poles adjacent to each other is 15 degrees.

Fig. 3 illustrates the valve stem holder 42. The valve stem holder 42 has a circular cylindrical shape. The valve stem holder 42 is open at the lower end. The valve stem holder 42 includes an upper wall portion 42a at the upper end. The upper wall portion 42a has a stem hole 42b. The valve stem holder 42 is fitted into a fitting hole 41a of the rotor 41. The valve stem holder 42 rotates together with the rotor 41. A movable stopper 42s is provided at the lower end of the outer circumferential surface of the valve stem holder 42. The movable stopper 42s is a projection extending radially outward. The second stem portion 32 of the valve member 30 is disposed in the stem hole 42b and is movable in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring and pushes the valve member 30 toward the valve seat 18. An internal thread 42c is provided on the inner circumferential surface of the valve stem holder 42. The movable stopper 42s is fixed relative to the rotor 41.

Fig. 4 illustrates the guide bush 43. The guide bush 43 includes a base portion 43a and a support portion 43b. The base portion 43a has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with the central axis of the body member 11 on the axis L and allows the guide bush 43 to be properly positioned relative to the body member 11 about the axis L. The support portion 43b has a circular cylindrical shape. The outer diameter of the support portion 43b is smaller than the outer diameter of the base portion 43a. The inner diameter of the support portion 43b is equal to the inner diameter of the base portion 43a. The support portion 43b is connected to the upper end of the base portion 43a and is coaxial with the base portion 43a. An external thread 43c is provided on the outer circumferential surface of the support portion 43b. The external thread 43c is screwed into the internal thread 42c of the valve stem holder 42. The first stem portion 31 of the valve member 30 is disposed inside the guide bush 43. The guide bush 43 supports the valve member 30 so that the valve member 30 is movable in the direction of the axis L.

Fig. 5 illustrates the stopper member 44. The stopper member 44 includes a stopper body 44a. The stopper body 44a has a circular cylindrical shape. An internal thread 44c is provided on the inner circumferential surface of the stopper body 44a. A fixed stopper 44s is provided on the outer circumferential surface of the stopper body 44a. The fixed stopper 44s is a projection extending radially outward. The internal thread 44c is engaged with the external thread 43c until the stopper body 44a comes into contact with the base portion 43a of the guide bush 43. As a result, the stopper member 44 is fixed to the guide bush 43. The fixed stopper 44s is fixed relative to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is joined to the second stem portion 32. The flange portion 45b is connected to the lower end of the fixed portion 45a. A return spring 48 is disposed outside the fixed member 45. The return spring 48 is a coil spring.

The motor-operated valve 5 includes the driving mechanism 40 that uses the rotation of the rotor 41 without speed reduction. The motor-operated valve 5 may include, instead of the driving mechanism 40, a driving mechanism that has a speed reduction mechanism reducing the rotational speed of the rotor 41.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tips of the pole teeth 61a point downward, while the tips of the pole teeth 61b point upward. The pole teeth 61a and the pole teeth 61b are alternately arranged one after another at regular angular intervals in the circumferential direction. The A-phase stator 61 has, for example, twelve pole teeth 61a and twelve pole teeth 61b. The angle between the pole teeth 61a and the pole teeth 61b adjacent to each other is 15 degrees. The A-phase stator 61 includes an A-phase coil 61c. When the A-phase coil 61c is energized, the pole teeth 61a and the pole teeth 61b have opposite polarities.

The B-phase stator 62 includes a plurality of claw-pole type pole teeth 62a and 62b in the inner circumference. The tips of the pole teeth 62a point downward, while the tips of the pole teeth 62b point upward. The pole teeth 62a and the pole teeth 62b are alternately arranged one after another at regular angular intervals in the circumferential direction. The B-phase stator 62 has, for example, twelve pole teeth 62a and twelve pole teeth 62b. The angle between the pole teeth 62a and the pole teeth 62b adjacent to each other is 15 degrees. The B-phase stator 62 includes a B-phase coil 62c. When the B-phase coil 62c is energized, the pole teeth 62a and the pole teeth 62b have opposite polarities.

The A-phase stator 61 is coaxial with the B-phase stator 62. The A-phase stator 61 is in contact with the B-phase stator 62. When viewed in the direction of the axis L, the angle between one of the pole teeth 61a of the A-phase stator 61 and one of the pole teeth 62a of the B-phase stator 62 adjacent to each other is 7.5 degrees. In other words, the B-phase stator 62 is located at a position where the B-phase stator 62 is rotated relative to the A-phase stator 61 about the axis L by 7.5 degrees from the position where the pole teeth 61a and the pole teeth 62a are arranged in the direction of the axis L.

The can 20 is disposed inside the stator 60. The rotor 41 is disposed inside the can 20. The stator 60 and the rotor 41 are members of a stepping motor 66. The stepping motor 66 is connected to the motor-operated valve control device 70.

Pulses P (P[1] to P[8]) having sequential numbers are repeatedly input to the stepping motor 66 in sequence to rotate the rotor 41. Specifically, driving currents corresponding to the pulses P are supplied to the stator 60 of the stepping motor 66 to rotate the rotor 41. In this specification, "the pulses P are input to the stepping motor 66" means "the driving currents corresponding to the pulses P are supplied to the stator 60 of the stepping motor 66".

When the pulses P are cyclically input to the stepping motor 66 in ascending order (in the order from pulse P[1] to P[8]), the rotor 41 rotates in a first direction, which corresponds to clockwise in Fig. 6. When the pulses P are cyclically input to the stepping motor 66 in descending order (in the order from pulse P[8] to P[1]), the rotor 41 rotates in a second direction, which corresponds to counterclockwise in Fig. 6.

In the motor-operated valve 5, the respective central axes of the valve port 17, the valve seat 18, the can 20, the valve member 30, the rotor 41, the valve stem holder 42, the guide bush 43, and the stator 60 (the A-phase stator 61 and the B-phase stator 62) are aligned with the axis L.

The motor-operated valve control device 70 includes a circuit board 71 on which electronic components (not illustrated) are mounted. As illustrated in Fig. 1, the motor-operated valve control device 70 includes a non-volatile memory 75, a communication device 76, a motor driver 77, a low-pass filter 78, and a computer 80. The motor-operated valve control device 70 controls the motor-operated valve 5 in accordance with a command from the air conditioner control device 110.

The non-volatile memory 75 stores data required to be held even when power is turned off. The non-volatile memory 75 is, for example, EEPROM or flash memory.

The communication device 76 is connected to the air conditioner control device 110 via a wired communication bus 120 and can communicate with the air conditioner control device 110. The air conditioning system 100 utilizes a communication system such as Local Interconnect Network (LIN) or Controller Area Network (CAN). The communication device 76 may be wirelessly connected to the air conditioner control device 110 and may wirelessly communicate with the air conditioner control device 110.

The motor driver 77 is controlled by the computer 80. The motor driver 77 is connected to the stator 60 of the stepping motor 66. Specifically, as illustrated in Fig. 7, the motor driver 77 is connected to the A-phase coil 61c of the A-phase stator 61 and the B-phase coil 62c of the B-phase stator 62. The motor driver 77 supplies the driving currents corresponding to the pulses P to the stator 60. The motor driver 77 supplies an A-phase current Ia to the A-phase coil 61c and supplies a B-phase current Ib to the B-phase coil 62c.

A step signal (STEP) and a direction signal (DIR) are input from the computer 80 to the motor driver 77 as signals corresponding to the pulses P. The step signal is a pulse signal. Inputting the step signal to the motor driver 77 while the direction signal indicating the first direction (for example, an H-level signal) is being input to the motor driver 77 corresponds to inputting the pulses P to the stepping motor 66 in ascending order. Inputting the step signal to the motor driver 77 while the direction signal indicating the second direction (for example, an L-level signal) is being input to the motor driver 77 corresponds to inputting the pulses P to the stepping motor 66 in descending order. Fig. 8 illustrates the relationship between the step signal, the direction signal, and the pulses P input to the stepping motor 66.

Pulses P[1] to P[8] are input to the stepping motor 66 in sequence. In response to the pulses P being input, the A-phase current Ia is supplied to the A-phase coil 61c, and the B-phase current Ib is supplied to the B-phase coil 62c. The A-phase current Ia and the B-phase current Ib are the driving currents for rotating the rotor 41.

A current control signal (CONTROL) is input from the computer 80 to the motor driver 77. The current control signal is used to set, in the motor driver 77, an A-phase current target value Ita and a B-phase current target value Itb, which are target values of the A-phase current Ia and the B-phase current Ib.

The A-phase current target value Ita is set for each of pulses P[1] to P[8]. The B-phase current target value Itb is set for each of pulses P[1] to P[8]. Fig. 9 illustrates correspondence between the pulse P, the A-phase current target value Ita, and the B-phase current target value Itb.

"+I2" is set for pulse P[1] as the A-phase current target value Ita, and "0" is set for pulse P[1] as the B-phase current target value Itb.

"+I1" is set for pulse P[2] as the A-phase current target value Ita, and "+I1" is set for pulse P[2] as the B-phase current target value Itb.

"0" is set for pulse P[3] as the A-phase current target value Ita, and "+I2" is set for pulse P[3] as the B-phase current target value Itb.

"-I1" is set for pulse P[4] as the A-phase current target value Ita, and "+I1" is set for pulse P[4] as the B-phase current target value Itb.

"-I2" is set for pulse P[5] as the A-phase current target value Ita, and "0" is set for pulse P[5] as the B-phase current target value Itb.

"-I1" is set for pulse P[6] as the A-phase current target value Ita, and "-I1" is set for pulse P[6] as the B-phase current target value Itb.

"0" is set for pulse P[7] as the A-phase current target value Ita, and "-I2" is set for pulse P[7] as the B-phase current target value Itb.

"+I1" is set for pulse P[8] as the A-phase current target value Ita, and "-I1" is set for pulse P[8] as the B-phase current target value Itb.

Currents indicated as "+I2" and "-I2" have the same magnitude and flow in opposite directions.

Currents indicated as "+I1" and "-I1" have the same magnitude and flow in opposite directions.

Currents indicated as "+I2" and "+I1" have different magnitudes and flow in the same direction.

Fig. 10 schematically illustrates waveforms of the A-phase current Ia and the B-phase current Ib when the pulses P are input to the stepping motor 66 in ascending order. In Fig. 10, the A-phase current Ia has the same magnitude and flows in the same direction as the A-phase current target value Ita, and the B-phase current Ib has the same magnitude and flows in the same direction as the B-phase current target value Itb. In Figs. 9 and 10, the sign (+/-) indicates the direction in which the current flows. "+" indicates the direction from a terminal A1 to a terminal A2 or from a terminal B1 to a terminal B2. "-" indicates the direction from the terminal A2 to the terminal A1 or from the terminal B2 to the terminal B1. "0" indicates that no current flows.

The A-phase current Ia and the B-phase current Ib are currents controlled by a pulse-width modulation method (PWM method). The A-phase current Ia and the B-phase current Ib have waveforms in which each current is turned on and off at constant time intervals shorter than the period of the pulse P. The reciprocal of the time interval is a pulse-width modulation frequency (PWM frequency). The A-phase current target value Ita and the B-phase current target value Itb are average values of currents supplied to the A-phase coil 61c and the B-phase coil 62c during the period of the pulse P.

A combination of the A-phase current Ia and B-phase current Ib differs for each pulse P. There are eight combinations, and this number is referred to as the number of patterns of the pulses P. "Pattern" is also referred to as "switching mode". The index numbers (1 to 8) of pulses P[1] to P[8] are pattern numbers for specifying pulses P[1] to P[8]. For example, the period of the pulse P is 8 milliseconds, and a single time period T consisting of pulses P[1] to P[8] is 64 milliseconds. The excitation mode of the stepping motor 66 is 1-2-phase excitation. The stepping motor 66 is controlled in a half-step mode. The step angle of the stepping motor 66 is 3.75 degrees.

Figs. 11 to 18 schematically illustrate the positional relationship between the magnetic poles of the rotor and the pole teeth of the stator when pulses P[1] to P[8] are input to the stepping motor. In Figs. 11 to 18, the magnetic poles of the rotor and the stator are schematically illustrated. In Figs. 11 to 18, the reference pole tooth 61a and the reference magnetic pole (S pole) of the rotor 41 are marked with a dot to facilitate recognition of the positional relationship between the rotor 41 and the stator 60 (the A-phase stator 61 and the B-phase stator 62).

When the pulses P are cyclically input to the stepping motor 66 in ascending order and the rotor 41 rotates in the first direction, a screw-feed action between the internal thread 42c of the valve stem holder 42 and the external thread 43c of the guide bush 43 moves the rotor 41 and the valve stem holder 42 downward. The valve stem holder 42 pushes the valve member 30 downward via the valve closing spring 47. The valve member 30 moves downward, and the plug portion 33 comes into contact with the valve seat 18. At this time, the rotor 41 is at a valve closing position Rc. When the rotor 41 at this position further rotates in the first direction, the valve closing spring 47 is compressed, and the rotor 41 and the valve stem holder 42 further move downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s constitute a stopper mechanism 49 restricting the rotation of the rotor 41 in the first direction when the rotor 41 is at the reference position Rx.

When the pulses P are cyclically input to the stepping motor 66 in descending order and the rotor 41 rotates in the second direction, the screw-feed action between the internal thread 42c of the valve stem holder 42 and the external thread 43c of the guide bush 43 moves the rotor 41 and the valve stem holder 42 upward. The valve stem holder 42 pushes the fixed member 45 upward. The valve member 30 moves upward together with the fixed member 45 and separates from the valve seat 18. A valve opening position Ro is defined as the position of the rotor 41 when the fluid flow rate at the valve port 17 (i.e., the opening degree of the valve port 17) is at a predetermined value in a predetermined flow-rate measuring environment. The predetermined value is appropriately set according to the configuration, the application, or similar factors of the motor-operated valve device 1. When the rotor 41 rotates in the second direction and reaches a full-open position Rz, the valve member 30 is positioned farthest from the valve port 17, and the opening degree of the valve port 17 reaches its maximum.

The number of the pulses P required to rotate the rotor 41 from the full-open position Rz to the reference position Rx is referred to as a stroke number Ns. In other words, in the motor-operated valve 5, when the rotor 41 is at the full-open position Rz and then Ns pulses P are input to the stepping motor 66, the rotor 41 is positioned at the reference position Rx. For example, the stroke number Ns is 500. The number of the pulses P required to rotate the rotor 41 from the reference position Rx to the full-open position Rz is also the stroke number Ns.

An initialization number Ni is set based on the stroke number Ns. The initialization number Ni is a sufficient number of the pulses P for rotating the rotor 41 from the full-open position Rz to the reference position Rx. In other words, when the rotor 41 is at any position and Ni pulses P are input to the stepping motor 66, the rotor 41 is positioned at the reference position Rx. For example, the initialization number Ni ranges from 1.05 to 1.3 times the stroke number Ns. The initialization number Ni is used in an initialization operation for positioning the rotor 41 at the reference position Rx.

As illustrated in Fig. 7, the motor driver 77 includes H-bridge circuits 77A and 77B, and a current control unit 77C. The H-bridge circuits 77A and 77B are current circuits. The motor driver 77 drives the stepping motor 66 using a bipolar driving method.

The H-bridge circuit 77A is connected to the A-phase coil 61c. The H-bridge circuit 77A includes switches SW11, SW12, SW13, and SW14 as switching elements. The H-bridge circuit 77B is connected to the B-phase coil 62c. The H-bridge circuit 77B includes switches SW21, SW22, SW23, and SW24 as switching elements. The switches SW11, SW12, SW13, SW14, SW21, SW22, SW23, and SW24 may be, for example, either N-channel MOSFETs or P-channel MOSFETs, or a mixture of both.

The switches SW11, SW12, SW13, SW14, SW21, SW22, SW23, and SW24 are controlled to be turned on (the conductive state) or turned off (the non-conductive state).

The current control unit 77C controls the H-bridge circuits 77A and 77B using the pulse-width modulation method according to the step and direction signals from the computer 80.

When the A-phase current Ia flowing through the A-phase coil 61c from the terminal A1 to the terminal A2 is supplied,

(1) the current control unit 77C turns off the switches SW12 and SW13, and
(2) the current control unit 77C controls the on-time (i.e., the duty cycle) of the switches SW11 and SW14 such that the magnitude of the A-phase current Ia matches the magnitude of the A-phase current target value Ita.

When the A-phase current Ia flowing through the A-phase coil 61c from the terminal A2 to the terminal A1 is supplied,

(1) the current control unit 77C turns off the switches SW11 and SW14, and
(2) the current control unit 77C controls the on-time of the switches SW12 and SW13 such that the magnitude of the A-phase current Ia matches the magnitude of the A-phase current target value Ita.

When the B-phase current Ib flowing through the B-phase coil 62c from the terminal B1 to the terminal B2 is supplied,

(1) the current control unit 77C turns off the switches SW22 and SW23, and
(2) the current control unit 77C controls the on-time of the switches SW21 and SW24 such that the magnitude of the B-phase current Ib matches the magnitude of the B-phase current target value Itb.

When the B-phase current Ib flowing through the B-phase coil 62c from the terminal B2 to the terminal B1 is supplied,

(1) the current control unit 77C turns off the switches SW21 and SW24, and
(2) the current control unit 77C controls the on-time of the switches SW22 and SW23 such that the magnitude of the B-phase current Ib matches the magnitude of the B-phase current target value Itb.

The low-pass filter 78 is an electrical circuit including a resistor and a capacitor. The low-pass filter 78 includes an A-phase low-pass filter 78A and a B-phase low-pass filter 78B.

The A-phase low-pass filter 78A has input terminals connected to the terminals A1 and A2 of the A-phase coil 61c and an output terminal connected to the computer 80. The A-phase low-pass filter 78A cuts off or substantially cuts off a voltage component, having a frequency greater than or equal to a cutoff frequency Fc, in a voltage VA generated between the terminals A1 and A2 of the A-phase coil 61c, and allows a voltage component Vac having a frequency lower than the cutoff frequency Fc to pass. The voltage component Vac is input to the computer 80.

The B-phase low-pass filter 78B has input terminals connected to the terminals B1 and B2 of the B-phase coil 62c and an output terminal connected to the computer 80. The B-phase low-pass filter 78B cuts off or substantially cuts off a voltage component, having a frequency greater than or equal to the cutoff frequency Fc, in a voltage VB generated between the terminals B1 and B2 of the B-phase coil 62c, and allows a voltage component Vbc having a frequency lower than the cutoff frequency Fc to pass. The voltage component Vbc is input to the computer 80.

The cutoff frequency Fc is set so that a voltage component of the voltage VA resulting from the A-phase current Ia and a voltage component of the voltage VB resulting from the B-phase current Ib are effectively cut off or attenuated in the low-pass filter 78. The lower the cutoff frequency Fc is, the more effectively these voltage components can be cut off. However, this increases the time constant of the low-pass filter 78, causing a greater delay in the waveforms of the voltage components Vac and Vbc. The allowable time for delay in the waveforms caused by the low-pass filter 78 is defined as an allowable delay time Td. The voltage component Vac primarily includes a voltage component generated by the rotation of the rotor 41, that is, a voltage electromagnetically induced in the A-phase coil 61c. The voltage component Vbc primarily includes a voltage component generated by the rotation of the rotor 41, that is, a voltage electromagnetically induced in the B-phase coil 62c.

In the embodiment, the PWM frequency is set to 20 kHz, and the cutoff frequency Fc is set to 1000 Hz. The cutoff frequency Fc of the low-pass filter 78 is determined, for example, using the following Expressions (a) to (c):

$$Vout = Vin/(sRC + 1) \qquad (a)$$

$$Fc = 1/(2\pi CR) \qquad (b)$$

$$Td \geq RC \qquad (c)$$

where Vin represents an input voltage, Vout represents an output voltage, R represents the resistance of the resistor, C represents the capacitance of the capacitor, and Td represents the allowable delay time. Expression (a) represents a transfer function of the low-pass filter 78, where $\omega$ represents an angular frequency, such that $s = j\omega$ and $\omega = 2\pi f$. By observing the output voltage Vout (i.e., the voltage components Vac and Vbc) while varying the cutoff frequency Fc (i.e., the resistance R and the capacitance C) within a range satisfying Expressions (a) to (c), a cutoff frequency Fc that can effectively cut off the voltage component of the voltage VA resulting from the A-phase current Ia and the voltage component of the voltage VB resulting from the B-phase current Ib is selected. The cutoff frequency Fc is sufficiently lower than the PWM frequency. The cutoff frequency Fc is preferably lower than or equal to one-tenth of the PWM frequency, and more preferably lower than or equal to one-twentieth of the PWM frequency.

The low-pass filter 78 may also be configured using an operational amplifier or a digital signal processor.

Fig. 19 illustrates examples of waveforms of the voltage VA generated in the A-phase coil 61c and the voltage VB generated in the B-phase coil 62c when the pulses P are input to the stepping motor 66 in ascending order. In Fig. 19, since the A-phase current Ia and the B-phase current Ib are controlled by the pulse-width modulation method, the voltage VA exhibits large fluctuations at short intervals during periods corresponding to pulses P[1], P[2], P[4], P[5], P[6], and P[8], while the voltage VB exhibits large fluctuations at short intervals during periods corresponding to pulses P[2], P[3], P[4], P[6], P[7], and P[8]. Fig. 20 illustrates examples of waveforms of the voltage component Vac of the voltage VA and the voltage component Vbc of the voltage VB. The voltage components Vac and Vbc are voltage components that have frequencies lower than the cutoff frequency Fc and pass through the low-pass filter 78. As illustrated in Fig. 20, by inputting the voltages VA and VB into the low-pass filter 78, the voltage components resulting from the A-phase current Ia and the B-phase current Ib can be removed.

The computer 80 is a microcomputer for embedded devices and incorporates a CPU, ROM, RAM, an input/output interface, an analog-to-digital converter, and similar components in a single package. The computer 80 may incorporate the non-volatile memory 75, the communication device 76, and the motor driver 77. The computer 80 functions as a rotation control unit 81, an obtaining unit 82, and a determining unit 83 by the CPU executing a program stored in the ROM. The computer 80 is a processor.

The rotation control unit 81 is configured to input the pulses P to the stepping motor 66 to rotate the rotor 41 in the first direction or the second direction. Specifically, the rotation control unit 81 controls the motor driver 77 in accordance with a command from the air conditioner control device 110 so as to supply the A-phase current Ia to the A-phase coil 61c and the B-phase current Ib to the B-phase coil 62c. The rotation control unit 81 inputs the step signal, the direction signal, and the current control signal to the motor driver 77.

The obtaining unit 82 is configured to obtain the voltage component Vac of the voltage VA generated in the A-phase coil 61c and the voltage component Vbc of the voltage VB generated in the B-phase coil 62c. In the following description, the voltage components Vac and Vbc may be simply referred to as "voltage components V".

Specifically, the obtaining unit 82 sequentially obtains the voltage components V when the rotation control unit 81 supplies the A-phase current Ia to the A-phase coil 61c and the B-phase current Ib to the B-phase coil 62c in response to pulse P[k] (where k = 1 to 8).

The obtaining unit 82 sequentially obtains the voltage components V at predetermined sampling intervals during a time period from the starting point to the ending point of the pulse P. For example, the time period from the starting point to the ending point of the pulse P is 8 milliseconds, and the sampling interval is 200 microseconds. For example, the obtaining unit 82 obtains the voltage component V 40 times in response to a single pulse P[k] being input.

The voltage components V sequentially obtained represent a waveform of the voltage component V. In this specification, "waveform" refers to the variation in a physical quantity (voltage) over time at a fixed point. "Waveform" is visualized on a coordinate plane, with the vertical axis representing physical quantity and the horizontal axis representing time. The word "waveform" can also refer to non-visual representations, such as a data table that has physical quantity data associated with time data and is stored in the RAM of the computer 80 or the non-volatile memory 75.

The determining unit 83 is configured to determine the state of the motor-operated valve 5 in the initialization operation, based on the voltage component V obtained by the obtaining unit 82. The motor-operated valve 5 has a rotation permitted state Sp and a rotation restricted state Sr. The rotation permitted state Sp is a state in which the rotor 41 has not reached the reference position Rx and the rotation of the rotor 41 in the first direction is permitted. The rotation restricted state Sr is a state in which the rotor 41 has reached the reference position Rx, the movable stopper 42s is in contact with the fixed stopper 44s, and the rotation of the rotor 41 in the first direction is restricted.

Figs. 21 and 22 illustrate examples of waveforms of the voltage components V when the pulses P are input to the stepping motor 66 in ascending order. Fig. 21 illustrates the waveforms when the motor-operated valve 5 is in the rotation permitted state Sp. Fig. 22 illustrates the waveforms when the motor-operated valve 5 is in the rotation restricted state Sr.

Fig. 23 illustrates the rotational angle of the rotor 41 when the pulses P are input to the stepping motor 66 in ascending order. In Fig. 23, a dark line (Sp) represents the rotational angle when the motor-operated valve 5 is in the rotation permitted state Sp, and a light line (Sr) represents the rotational angle when the motor-operated valve 5 is in the rotation restricted state Sr. When the motor-operated valve 5 is in the rotation permitted state Sp, the rotational angle gradually increases in response to pulses P[1] to P[8] being input. When the motor-operated valve 5 is in the rotation restricted state Sr, the rotational angle does not change in response to pulses P[1], P[2], P[7], and P[8] being input, significantly decreases in response to pulse P[3] being input, and gradually increases in response to pulses P[4], P[5], and P[6] being input.

Fig. 24 illustrates examples of waveforms of the voltage components V when the pulses P are input to the stepping motor 66 in ascending order. In Fig. 24, a dark line (Sp) represents the voltage component V when the motor-operated valve 5 is in the rotation permitted state Sp, and a light line (Sr) represents the voltage component V when the motor-operated valve 5 is in the rotation restricted state Sr. As illustrated in Fig. 24, the waveform of the voltage component V when the motor-operated valve 5 is in the rotation permitted state Sp differs from the waveform of the voltage component V when the motor-operated valve 5 is in the rotation restricted state Sr. Specifically, the waveforms corresponding to pulses P[1] to P[4], P[7], and P[8] differ between the rotation permitted state Sp and the rotation restricted state Sr, while the waveforms corresponding to pulses P[5] and P[6] substantially coincide. Consequently, the waveform of the voltage component V when the motor-operated valve 5 is in the rotation permitted state Sp is set as the reference waveform of the voltage component V. By comparing the reference waveform with the waveform of the voltage component V obtained by the obtaining unit 82, it is possible to determine whether the motor-operated valve 5 is in the rotation permitted state Sp or in the rotation restricted state Sr. The waveform of the voltage component V when the motor-operated valve 5 is in the rotation restricted state Sr may be set as the reference waveform of the voltage component V.

The determining unit 83 determines the state of the motor-operated valve 5 by comparing the waveform of the voltage component V obtained by the obtaining unit 82 with the reference waveform of the voltage component V.

The reference waveform of the voltage component Vac is set for each of pulses P[1] to P[8]. The reference waveform of the voltage component Vac is set based on the waveform of the voltage component Vac obtained, using the motor-operated valve 5 in the rotation permitted state Sp, when the driving current is supplied to the stator 60 in response to pulses P[1] to P[8] being input in ascending order.

The reference waveform of the voltage component Vbc is set for each of pulses P[1] to P[8]. The reference waveform of the voltage component Vbc is set based on the waveform of the voltage component Vbc obtained, using the motor-operated valve 5 in the rotation permitted state Sp, when the driving current is supplied to the stator 60 in response to pulses P[1] to P[8] being input in ascending order.

The reference waveform of the voltage component V is stored in the non-volatile memory 75 as a data table.

Reference waveform tables Ca[1] to Ca[8] are stored in the non-volatile memory 75. The reference waveform tables Ca[1] to Ca[8] indicate the reference waveforms of the voltage component Vac set for respective pulses P[1] to P[8].

Reference waveform tables Cb[1] to Cb[8] are stored in the non-volatile memory 75. The reference waveform tables Cb[1] to Cb[8] indicate the reference waveforms of the voltage component Vbc set for respective pulses P[1] to P[8].

Fig. 25 illustrates an example of the reference waveform table Ca[1]. In the data table, time points t, defined at predetermined intervals from the starting point (time point 0) of the pulse P, are each associated with a reference voltage rv at the corresponding time point t. The intervals between the time points t are equal to the sampling interval (200 microseconds) used in the obtaining unit 82. A single data table includes forty pairs of the time point t and the reference voltage rv. In Fig. 25, the unit of the time point t is a microsecond. The unit of the reference voltage rv is a millivolt. The units of the time points t and the reference voltages rv may be proprietary units, such as units corresponding to the sampling intervals and the resolution of the analog-to-digital converter of the motor-operated valve control device 70.

The determining unit 83 calculates a value, referred to as a difference-degree score, indicating the degree of the difference between the waveform of the voltage component V obtained by the obtaining unit 82 and the reference waveform of the voltage component V. The greater the difference-degree score, the greater the degree of the difference between the waveform of the voltage component V and the reference waveform of the voltage component V.

The determining unit 83 calculates a difference-degree score sva[k] using the voltage component Vac obtained in response to pulse P[k] being input and the reference waveform table Ca[k].

When the voltage component Vac is obtained by the obtaining unit 82 at an obtaining time tv in response to pulse P[k] being input, the determining unit 83 reads, from the reference waveform table Ca[k] for pulse P[k], the reference voltage rv associated with the time point t corresponding to the obtaining time tv. The determining unit 83 calculates a value (referred to as a difference value dv) by subtracting the reference voltage rv from the voltage component Vac obtained by the obtaining unit 82. The determining unit 83 calculates a squared value (referred to as an intermediate value dv2) of the difference value dv. The determining unit 83 calculates a difference-degree score sva[k] by summing the intermediate values dv2 calculated in response to pulse P[k] being input.

The determining unit 83 calculates the difference-degree score sva[k] using the voltage component Vac obtained by the obtaining unit 82 during a part of the time period from the starting point to the ending point of pulse P[k]. Specifically, when a time period from the starting point of pulse P[k] to a time point t1 is defined as a first part p1 and a time period from the time point t1 to a time point t2 is defined as a second part p2, the determining unit 83 calculates the difference-degree score sva[k] using the voltage component Vac obtained during the second part p2. The determining unit 83 does not use the voltage component Vac in the first part p1 for calculating the difference-degree score sva[k]. The time point t1 is later than the starting point of pulse P[k]. The time point t2 is later than the time point t1 and is earlier than the ending point of pulse P[k]. The time point t2 may coincide with the ending point of pulse P[k].

Immediately after the starting point of pulse P[k], the driving current is in a transient state, and the voltages VA and VB are unstable. Therefore, the determining unit 83 can determine the state of the motor-operated valve 5 with higher accuracy by calculating the difference-degree score sva[k] using the voltage component Vac obtained by the obtaining unit 82 after a certain time has elapsed since the starting point of pulse P[k] and the voltages VA and VB have stabilized.

Fig. 26 illustrates an example of the waveform of the voltage component Vac obtained in response to pulse P[k] being input and the reference waveform of the voltage component Vac. In Fig. 26, a solid line (obtained waveform) represents the waveform of the voltage component Vac, and a dashed line represents the reference waveform of the voltage component Vac. In Fig. 26, the length of each vertical line connecting the waveform of the voltage component Vac and the reference waveform of the voltage component Vac in the second part p2 corresponds to the difference value dv used for calculating the difference-degree score sva[k].

The duration of the first part p1 is set within a range from 5% to 50%, preferably from 20% to 30%, of the time period from the starting point to the ending point of pulse P[k]. The duration of the second part p2 is set within a range from 50% to 95%, preferably from 70% to 80%, of the time period from the starting point to the ending point of pulse P[k]. The determining unit 83 may calculate the difference-degree score sva[k] using the voltage component Vac obtained by the obtaining unit 82 during the time period (the entire time period) from the starting point to the ending point of pulse P[k]. In this configuration, the time point t1 coincides with the starting point of pulse P[k], and the time point t2 coincides with the ending point of pulse P[k].

The difference-degree score sva is given by the following Expression (1), where v[tv] represents the voltage component Vac obtained at an obtaining time tv during the time period from the time point t1 to the time point t2, and rv[tv] represents the reference voltage rv associated with the time point t corresponding to the obtaining time tv in the data table of the reference waveform.

$$sva = \sum_{tv=t1}^{t2} (v[tv] - rv[tv])^2 \quad \cdots \quad (1)$$

The difference-degree score sva is not limited to being obtained by the calculation using Expression (1) above. For example, the difference-degree score sva may relate to the transition in magnitude of the voltage component Vac at respective obtaining times tv. Specifically, the motor-operated valve control device 70 calculates the difference value dv between the voltage component Vac at the obtaining time tv corresponding to the time point t and the reference voltage rv associated with this time point t. The difference value dv is calculated as an absolute value. The motor-operated valve control device 70 calculates the difference values dv using the voltage components Vac obtained during the second part p2 and uses the number of the difference values dv, which are greater than or equal to a predetermined difference threshold, as the difference-degree score. This difference-degree score also appropriately reflects the degree of the difference in the shapes of the waveforms.

The determining unit 83 calculates a difference-degree score svb[k] using the voltage component Vbc obtained in response to pulse P[k] being input and the reference waveform table Cb[k], in the same manner as the difference-degree score sva[k]. In the following description, the expressions "difference-degree score sva" and "difference-degree score svb" are collectively referred to as "difference-degree score sv".

The determining unit 83 determines the state of the motor-operated valve 5 based on a difference-degree score sv[k]. Specifically, the determining unit 83 compares the difference-degree score sv[k] with a predetermined difference-degree score threshold H. The determining unit 83 determines whether the motor-operated valve 5 is in the rotation permitted state Sp or the rotation restricted state Sr, based on the result of comparing the difference-degree score sv[k] with the difference-degree score threshold H. The motor-operated valve control device 70 may have difference-degree score thresholds H[1] to H[8] corresponding to the difference-degree scores sv[1] to sv[8]. The difference-degree score thresholds H[1] to H[8] may be identical to each other or may be different from one another.

An example (Operation Example 1) of the initialization operation of the motor-operated valve control device 70 is described below with reference to Fig. 27.

When the motor-operated valve control device 70 (the computer 80) receives an initialization command from the air conditioner control device 110 (S110), the motor-operated valve control device 70 starts inputting pulses P[1] to P[8] to the stepping motor 66 in ascending order (S120). This starts the initialization operation, and the driving currents corresponding to pulses P[1] to P[8] are supplied to the stator 60 to rotate the rotor 41 in the first direction.

When the rotor 41 rotates in the first direction, the motor-operated valve control device 70 sequentially obtains the voltage components Vac of the voltage VA generated in the A-phase coil 61c and the voltage components Vbc of the voltage VB generated in the B-phase coil 62c (S130). That is, the motor-operated valve control device 70 obtains the waveform of the voltage component Vac and the waveform of the voltage component Vbc. The motor-operated valve control device 70 obtains the voltage components Vac and Vbc when the driving currents are supplied to the stator 60 in response to pulse P[k] (where k = 1 to 8) being input.

The motor-operated valve control device 70 calculates the difference-degree score sv (S140). Specifically, the motor-operated valve control device 70 calculates the difference-degree score sva[k] using the reference waveform table Ca[k] in response to pulse P[k] being input. The motor-operated valve control device 70 calculates the difference-degree score svb[k] using the reference waveform table Cb[k] in response to pulse P[k] being input.

The motor-operated valve control device 70 determines the state of the motor-operated valve 5 based on the difference-degree score sv[k] at or before the ending point of pulse P[k] (S150). In other words, the motor-operated valve control device 70 determines the state of the motor-operated valve 5 based on the difference-degree score sv[k] before pulse P[j] immediately following pulse P[k] (where j = k + 1 when k = 1 to 7, and j = 1 when k = 8) is input. Pulse P[k] is a determination target pulse. Specifically, the motor-operated valve control device 70 compares the difference-degree score sva[k] with the difference-degree score threshold H and compares the difference-degree score svb[k] with the difference-degree score threshold H. When the difference-degree score sva[k] is greater than or equal to the difference-degree score threshold H and the difference-degree score svb[k] is greater than or equal to the difference-degree score threshold H, the motor-operated valve control device 70 determines that the motor-operated valve 5 is in the rotation restricted state Sr. When the difference-degree score sva[k] is less than the difference-degree score threshold H or the difference-degree score svb[k] is less than the difference-degree score threshold H, the motor-operated valve control device 70 determines that the motor-operated valve 5 is in the rotation permitted state Sp. The motor-operated valve control device 70 may determine the state of the motor-operated valve 5 using only one of the difference-degree scores sva[k] and svb[k].

When the motor-operated valve control device 70 determines that the motor-operated valve 5 is in the rotation restricted state Sr (Y in S160), the motor-operated valve control device 70 stops inputting the pulses P to the stepping motor 66 and notifies the air conditioner control device 110 of the completion (success) of the initialization operation (S170).

When the motor-operated valve control device 70 determines that the motor-operated valve 5 is in the rotation permitted state Sp (N in S160) and the number of the pulses P input to the stepping motor 66 exceeds the initialization number Ni (Y in S180), the motor-operated valve control device 70 stops inputting the pulses P to the stepping motor 66 and notifies the air conditioner control device 110 of the completion (failure) of the initialization operation (S190).

When the number of the pulses P input to the stepping motor 66 is less than or equal to the initialization number Ni (N in S180), the motor-operated valve control device 70 executes S130 to S180 again.

When the initialization operation succeeds, the rotor 41 is positioned at the reference position Rx.

In Operation Example 1 described above, the motor-operated valve control device 70 calculates the difference-degree score sv[k] in response to pulse P[k] being input and determines the state of the motor-operated valve 5 before pulse P[j] immediately following the pulse P[k] is input. The motor-operated valve control device 70 calculates the difference-degree score sv[k] using the voltage component V obtained during the second part p2 (from time point t1 to time point t2), which is a part of the time period from the starting point to the ending point of pulse P[k].

For example, when the time point t2 is near the ending point of the pulse P[k], the motor-operated valve control device 70 may calculate the difference-degree score sv[k] in the input period of pulse P[j] immediately following pulse P[k]. In this configuration, the motor-operated valve control device 70 determines in the input period of pulse P[j] immediately following pulse P[k] whether the motor-operated valve 5 is in the rotation restricted state Sr, using the difference-degree score sv[k]. Operation Examples 2 and 3 in this configuration are described with reference to Fig. 28.

In Operation Examples 2 and 3, when the motor-operated valve control device 70 determines that the motor-operated valve 5 is in the rotation restricted state Sr, the motor-operated valve control device 70 positions the rotor 41 at the position where the motor-operated valve 5 has entered the rotation restricted state Sr (S165). In Operation Examples 2 and 3, the steps other than step S165 are the same as those of Operation Example 1. Steps S165 in Operation Examples 2 and 3 are described below.

In Operation Example 2, when the motor-operated valve control device 70 determines, in the input period of pulse P[j] immediately following pulse P[k], that the motor-operated valve 5 is in the rotation restricted state Sr, based on the difference-degree score sv[k] (Y in S160), the motor-operated valve control device 70 inputs a single pulse P[k] following pulse P[j] (S165). For example, when the motor-operated valve control device 70 determines, in the input period of pulse P[8], that the motor-operated valve 5 is in the rotation restricted state Sr, based on the difference-degree score sv[7], the motor-operated valve control device 70 inputs a single pulse P[7] following pulse P[8]. As a result, the rotor 41 is positioned at a position corresponding to pulse P[k], which causes the motor-operated valve 5 to change from the rotation permitted state Sp to the rotation restricted state Sr. The motor-operated valve control device 70 stops inputting the pulses P to the stepping motor 66 and notifies the air conditioner control device 110 of the completion (success) of the initialization operation (S170).

In Operation Example 3, when the motor-operated valve control device 70 determines, in the input period of pulse P[j] immediately following pulse P[k], that the motor-operated valve 5 is in the rotation restricted state Sr, based on the difference-degree score sv[k] (Y in S160), the motor-operated valve control device 70 inputs the pulses P following pulse P[j] in ascending order until the motor-operated valve control device 70 inputs pulse P[k] (S165). For example, when the motor-operated valve control device 70 determines, in the input period of pulse P[8], that the motor-operated valve 5 is in the rotation restricted state Sr, based on the difference-degree score sv[7], the motor-operated valve control device 70 inputs pulses P[1] to P[7] following pulse P[8]. As a result, the rotor 41 is positioned at a position corresponding to pulse P[k], which causes the motor-operated valve 5 to change from the rotation permitted state Sp to the rotation restricted state Sr. The motor-operated valve control device 70 stops inputting the pulses P to the stepping motor 66 and notifies the air conditioner control device 110 of the completion (success) of the initialization operation (S170).

As described above, the motor-operated valve device 1 includes the motor-operated valve 5 and the motor-operated valve control device 70. The motor-operated valve 5 includes the valve body 10 that has the valve port 17, the stepping motor 66 that includes the rotor 41 and the stator 60, and the valve member 30 that moves relative to the valve port 17 when the rotor 41 rotates. The motor-operated valve control device 70 includes the low-pass filter 78 and the computer 80. The A-phase current Ia and the B-phase current Ib for rotating the rotor 41 are controlled by the pulse-width modulation method and are supplied to the A-phase coil 61c and the B-phase coil 62c of the stator 60. The low-pass filter 78 has the cutoff frequency Fc lower than the PWM frequency used in the pulse-width modulation method. The low-pass filter 78 allows the voltage component Vac having a frequency lower than the cutoff frequency Fc in the voltage VA generated in the A-phase coil 61c to pass, and allows the voltage component Vbc having a frequency lower than the cutoff frequency Fc in the voltage VB generated in the B-phase coil 62c to pass. The computer 80 is configured to determine, using the voltage components Vac and Vbc passing through the low-pass filter 78, whether the motor-operated valve 5 is in the rotation restricted state Sr in which the rotation of the rotor 41 is restricted.

With this configuration, a voltage component resulting from the A-phase current Ia and having a relatively high frequency can be removed from the voltage VA generated in the A-phase coil 61c, thereby inhibiting the voltage component generated by the rotation of the rotor 41 from being masked by the voltage component resulting from the A-phase current Ia. A voltage component resulting from the B-phase current Ib and having a relatively high frequency can be removed from the voltage VB generated in the B-phase coil 62c, thereby inhibiting the voltage component generated by the rotation of the rotor 41 from being masked by the voltage component resulting from the B-phase current Ib. Consequently, even when the A-phase current Ia is supplied to the A-phase coil 61c, whether the motor-operated valve 5 is in the rotation restricted state Sr can be determined based on the voltage VA. Even when the B-phase current Ib is supplied to the B-phase coil 62c, whether the motor-operated valve 5 is in the rotation restricted state Sr can be determined based on the voltage VB. Therefore, whether the rotation of the rotor 41 of the stepping motor 66 is restricted can be determined at an appropriate timing.

The computer 80 of the motor-operated valve control device 70 is configured to determine, based on the degree of the difference between the waveform of the voltage component Vac and the reference waveform of the voltage component Vac and the degree of the difference between the waveform of the voltage component Vbc and the reference waveform of the voltage component Vbc, whether the motor-operated valve 5 is in the rotation restricted state Sr. With this configuration, the motor-operated valve control device 70 can determine the state of the motor-operated valve 5 with higher accuracy than with a configuration in which the state of the motor-operated valve 5 is determined based on the area or the maximum amplitude of the waveform.

The motor driver 77 is connected to the A-phase coil 61c and the B-phase coil 62c. When the pulses P having sequential numbers are repeatedly input to the motor driver 77 in sequence, the motor driver 77 supplies the A-phase current Ia and the B-phase current Ib corresponding to the pulses P to the A-phase coil 61c and the B-phase coil 62c to rotate the rotor 41. The computer 80 is configured to start inputting the pulses P to the motor driver 77. The computer 80 is configured to obtain the voltage components Vac and Vbc when the A-phase current Ia and the B-phase current Ib corresponding to pulse P[k] input to the motor driver 77 are supplied to the A-phase coil 61c and the B-phase coil 62c. The computer 80 is configured to determine whether the motor-operated valve 5 is in the rotation restricted state Sr, using the voltage components Vac and Vbc. The computer 80 is configured to stop inputting the pulses P before inputting pulse P[j] immediately following pulse P[k] on determination that the motor-operated valve 5 is in the rotation restricted state Sr. With this configuration, the rotor 41 is positioned at a position corresponding to pulse P[k], which causes the motor-operated valve 5 to change from the rotation permitted state Sp to the rotation restricted state Sr. Therefore, the rotor 41 can be positioned more accurately at the reference position Rx.

In a configuration in which the computer 80 is configured to determine, in the input period of pulse P[j] immediately following pulse P[k], using the voltage components Vac and Vbc, whether the motor-operated valve 5 is in the rotation restricted state Sr, the computer 80 may be configured to operate as described below. When the computer 80 is configured to determine that the motor-operated valve 5 is in the rotation restricted state Sr, the computer 80 is configured to input pulse P[k] following pulse P[j] to the motor driver 77, and then stop inputting the pulses P. Alternatively, when the computer 80 is configured to determine that the motor-operated valve 5 is in the rotation restricted state Sr, the computer 80 is configured to input the pulses P following pulse P[j] to the motor driver 77 in ascending order until inputting pulse P[k] to the motor driver 77, and then stop inputting the pulses P. Thus, even with this configuration, the rotor 41 is positioned at a position corresponding to pulse P[k], which causes the motor-operated valve 5 to change from the rotation permitted state Sp to the rotation restricted state Sr. Therefore, the rotor 41 can be positioned more accurately at the reference position Rx.

In the motor-operated valve device 1 described above, the motor-operated valve control device 70 drives the stepping motor 66 in a half-step mode. The motor-operated valve control device 70 may drive the stepping motor 66 in a micro-step mode 1 or a micro-step mode 2. The motor-operated valve control device 70 may drive the stepping motor 66 in a full-step mode. In the half-step mode, the magnitude of the driving current has three levels (I2, I1, and 0). In the micro-step mode 1, the magnitude of the driving current has five levels. In the micro-step mode 2, the magnitude of the driving current has nine levels.

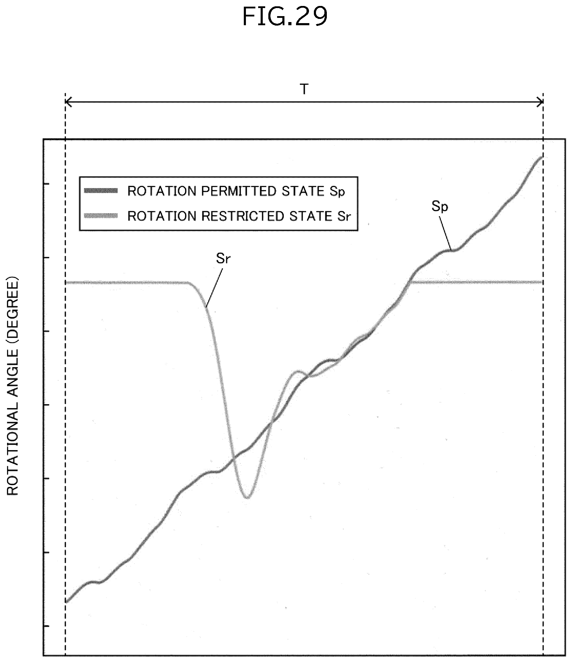

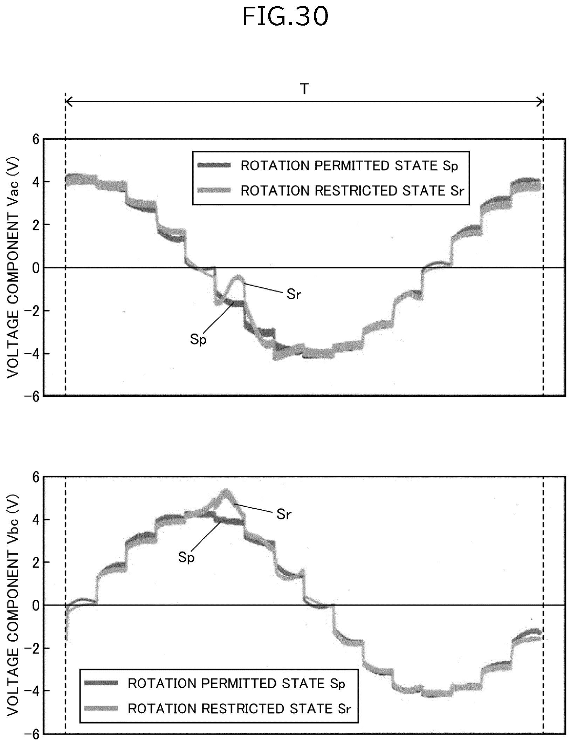

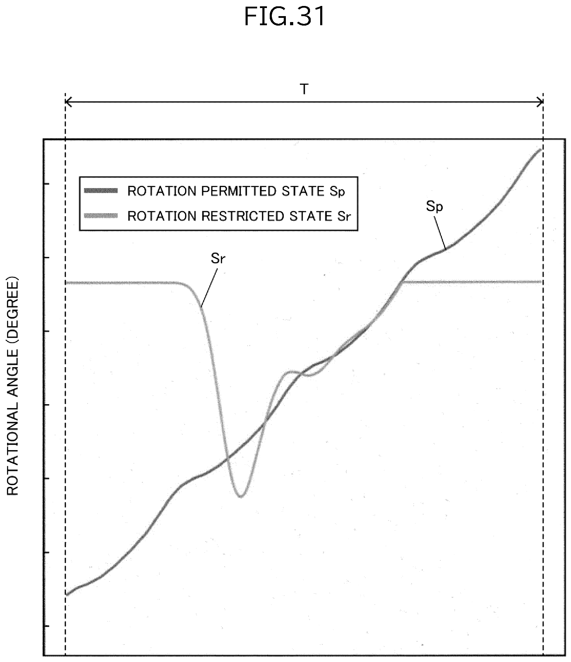

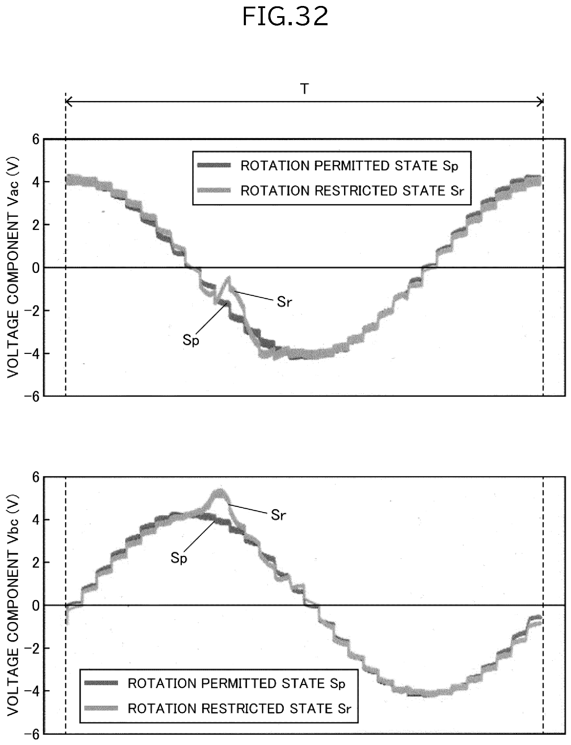

Figs. 29 and 30 illustrate the rotational angle of the rotor 41 and the voltage components V (the voltage component Vac and the voltage component Vbc) when the stepping motor 66 is driven in the micro-step mode 1. Figs. 31 and 32 illustrate the rotational angle of the rotor 41 and the voltage components V (the voltage component Vac and the voltage component Vbc) when the stepping motor 66 is driven in the micro-step mode 2. In Figs. 29 and 31, the horizontal axis represents time and the vertical axis represents rotational angle. In Figs. 30 and 32, the horizontal axis represents time and the vertical axis represents voltage.

Figs. 29 and 31 illustrate the rotational angle of the rotor 41 when the pulses P are input to the stepping motor 66 in ascending order. In Figs. 29 and 31, dark lines (Sp) represent the rotational angle when the motor-operated valve 5 is in the rotation permitted state Sp, and light lines (Sr) represent the rotational angle when the motor-operated valve 5 is in the rotation restricted state Sr.

Figs. 30 and 32 illustrate examples of waveforms of the voltage components V when the pulses P are input to the stepping motor 66 in ascending order. In Figs. 30 and 32, dark lines (Sp) represent the voltage components V when the motor-operated valve 5 is in the rotation permitted state Sp, and light lines (Sr) represent the voltage components V when the motor-operated valve 5 is in the rotation restricted state Sr.

A configuration in which the stepping motor 66 is driven in a micro-step mode has the same or substantially the same functions and effects as those of the configuration in which the stepping motor 66 is driven in the half-step mode.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

Reference Signs List

1 ... motor-operated valve device, 5 ... motor-operated valve, 10 ... valve body, 11 ... body member, 11a ... fitting hole, 11b ... through hole, 11d ... planar part, 13 ... connection member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... plug portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... A-phase coil, 62 ... B-phase stator, 62a ... pole tooth, 62b ... pole tooth, 62c ... B-phase coil, 66 ... stepping motor, 70 ... motor-operated valve control device, 71 ... circuit board, 75 ... non-volatile memory, 76 ... communication device, 77 ... motor driver, 77A ... H-bridge circuit, 77B ... H-bridge circuit, 77C ... current control unit, 78 ... low-pass filter, 78A ... A-phase low-pass filter, 78B ... B-phase low-pass filter, 80 ... computer, 81 ... rotation control unit, 82 ... obtaining unit, 83 ... determining unit, 100 ... air conditioning system, 101 ... compressor, 102 ... condenser, 103 ... evaporator, 105 ... pipe, 110 ... air conditioner control device, 120 ... wired communication bus, L ... axis.

**Claims**

1. A motor-operated valve control device for controlling a motor-operated valve, the motor-operated valve including a valve body that has a valve port, a stepping motor that includes a rotor and a stator, and a valve member that moves relative to the valve port when the rotor rotates,

   the motor-operated valve control device comprising: a low-pass filter; and a processor,
   wherein a driving current for rotating the rotor is controlled by a pulse-width modulation method and is supplied to a coil of the stator,
   wherein the low-pass filter has a cutoff frequency lower than a pulse-width modulation frequency used in the pulse-width modulation method, and allows a voltage component in a voltage generated in the coil to pass, the voltage component having a frequency lower than the cutoff frequency, and
   wherein the processor is configured to determine, using the voltage component passing through the low-pass filter, whether the motor-operated valve is in a rotation restricted state in which rotation of the rotor is restricted.

2. The motor-operated valve control device according to Claim 1, wherein the processor is configured to determine, based on a degree of difference between a waveform of the voltage component and a reference waveform of the voltage component, whether the motor-operated valve is in the rotation restricted state.

3. The motor-operated valve control device according to Claim 1 or 2,

   wherein a motor driver is connected to the coil,
   wherein when pulses having sequential numbers are repeatedly input to the motor driver in sequence, the motor driver supplies the driving current corresponding to the pulses to the coil to rotate the rotor, and
   wherein the processor is configured to:

   start inputting the pulses to the motor driver;
   obtain the voltage component when the driving current corresponding to one of the pulses input to the motor driver is supplied to the coil, the one pulse being hereinafter referred to as a "determination target pulse", and determine, using the voltage component, whether the motor-operated valve is in the rotation restricted state; and
   on determination that the motor-operated valve is in the rotation restricted state, stop inputting the pulses before inputting a pulse immediately following the determination target pulse.

4. The motor-operated valve control device according to Claim 1 or 2,

   wherein a motor driver is connected to the coil,
   wherein when pulses having sequential numbers are repeatedly input to the motor driver in sequence, the motor driver supplies the driving current corresponding to the pulses to the coil to rotate the rotor, and
   wherein the processor is configured to:

   start inputting the pulses to the motor driver;
   obtain the voltage component when the driving current corresponding to one of the pulses input to the motor driver is supplied to the coil, the one pulse being hereinafter referred to as a "determination target pulse", and determine, during an input period of a pulse immediately following the determination target pulse, whether the motor-operated valve is in the rotation restricted state, using the voltage component; and
   on determination that the motor-operated valve is in the rotation restricted state, input, following the pulse immediately following the determination target pulse, a pulse having a number identical to the number for the determination target pulse to the motor driver, and stop inputting the pulses.

5. The motor-operated valve control device according to Claim 1 or 2,

   wherein a motor driver is connected to the coil,
   wherein when pulses having sequential numbers are repeatedly input to the motor driver in sequence, the motor driver supplies the driving current corresponding to the pulses to the coil to rotate the rotor, and
   wherein the processor is configured to:

   start inputting the pulses to the motor driver;

obtain the voltage component when the driving current corresponding to one of the pulses input to the motor driver is supplied to the coil, the one pulse being hereinafter referred to as a "determination target pulse", and determine, during an input period of a pulse immediately following the determination target pulse, whether the motor-operated valve is in the rotation restricted state, using the voltage component; and

on determination that the motor-operated valve is in the rotation restricted state, input, following the pulse immediately following the determination target pulse, the pulses to the motor driver in sequence until inputting a pulse having a number identical to the number for the determination target pulse to the motor driver, and stop inputting the pulses.

6. The motor-operated valve control device according to Claim 1 or 2, wherein the cutoff frequency is set based on the pulse-width modulation frequency.

7. A motor-operated valve device comprising:

   the motor-operated valve; and
   the motor-operated valve control device according to Claim 1.

8. A method for determining a state of a motor-operated valve, the motor-operated valve including a valve body that has a valve port, a stepping motor that includes a rotor and a stator, and a valve member that moves relative to the valve port when the rotor rotates,
   the method comprising:

   supplying a driving current for rotating the rotor to a coil of the stator, the driving current being controlled by a pulse-width modulation method;
   inputting a voltage generated in the coil to a low-pass filter having a cutoff frequency lower than a pulse-width modulation frequency used in the pulse-width modulation method, the low-pass filter allowing a voltage component in the voltage generated in the coil to pass, the voltage component having a frequency lower than the cutoff frequency; and
   determining, using the voltage component passing through the low-pass filter, whether the motor-operated valve is in a rotation restricted state in which rotation of the rotor is restricted.

# FIG.1

# FIG.2

# FIG.3

（A）

（B）

# FIG.4

# FIG.5

(A)

(B)

# FIG.6

# FIG.7

FIG.8

PULSE    P[1] P[2] P[3] P[4] P[5] P[6] P[7] P[8] P[1] P[2] P[3] P[4] P[5]    P[4] P[3] P[2] P[1] P[8] P[7] P[6] P[5] P[4] P[3] P[2] P[1] P[8]

STEP

DIR

FIG.9

| | P[1] | P[2] | P[3] | P[4] | P[5] | P[6] | P[7] | P[8] | NOTE |
|---|---|---|---|---|---|---|---|---|---|
| A-PHASE CURRENT TARGET VALUE | +I2 | +I1 | 0 | −I1 | −I2 | −I1 | 0 | +I1 | +:A1→A2<br>O:OFF<br>−:A2→A1 |
| B-PHASE CURRENT TARGET VALUE | 0 | +I1 | +I2 | +I1 | 0 | −I1 | −I2 | −I1 | +:B1→B2<br>O:OFF<br>−:B2→B1 |

# FIG.10

# FIG.11

# FIG.12

| | | | | | | |
|---|---|---|---|---|---|---|
| A-PHASE STATOR | P[2] | | S\N/S\N/S\N/S | | 61a 61b | 61 |
| ROTOR | | | N\S\N\S\N\S\N | | | 41 |
| B-PHASE STATOR | | | /S\N/S\N/S\N/S | | 62a 62b | 62 |

# FIG.13

P[3]

A-PHASE STATOR
ROTOR
B-PHASE STATOR

# FIG.14

# FIG.15

# FIG.16

P[6]

A-PHASE STATOR

ROTOR

B-PHASE STATOR

# FIG.17

# FIG.18

# FIG.19

# FIG.20

# FIG.21

# FIG.22

# FIG.23

# FIG.24

# FIG.25

| # | TIME POINT t | REFERENCE VOLTAGE rv |
|---|---|---|
| 0 | 0 | 3850 |
| 1 | 200 | 3972 |
| 2 | 400 | 4236 |
| 3 | 600 | 4351 |
| 4 | 800 | 4420 |
| 5 | 1000 | 4518 |
| 6 | 1200 | 4550 |
| 7 | 1400 | 4572 |
| 8 | 1600 | 4586 |
| 9 | 1800 | 4580 |
| : | : | : |
| 34 | 6800 | 4487 |
| 35 | 7000 | 4462 |
| 36 | 7200 | 4456 |
| 37 | 7400 | 4430 |
| 38 | 7600 | 4432 |
| 39 | 7800 | 4426 |

# FIG.26

# FIG.27

```
                    ┌──────────────┐
                    │   START      │
                    └──────┬───────┘
                           │
                    ┌──────▼─────────────────┐
                    │ RECEIVE INITIALIZATION │─── S110
                    │ COMMAND                │
                    └──────┬─────────────────┘
                           │
                    ┌──────▼─────────────────┐
                    │ START INPUTTING PULSES P│─── S120
                    │ IN ASCENDING ORDER      │
                    └──────┬─────────────────┘
                           │
                    ┌──────▼─────────────────┐
                    │ OBTAIN VOLTAGE          │─── S130
                    │ COMPONENTS V            │
                    └──────┬─────────────────┘
                           │
                    ┌──────▼─────────────────┐
                    │ CALCULATE               │─── S140
                    │ DIFFERENCE-DEGREE       │
                    │ SCORE sv                │
                    └──────┬─────────────────┘
                           │
                    ┌──────▼─────────────────┐
                    │ DETERMINE STATE OF      │─── S150
                    │ MOTOR-OPERATED VALVE    │
                    └──────┬─────────────────┘
```

- S160 — IS MOTOR-OPERATED VALVE IN ROTATION RESTRICTED STATE Sr?
- S180 — DOES NUMBER OF INPUT PULSES P EXCEED INITIALIZATION NUMBER Ni?
- S190 — STOP INPUTTING PULSES P / NOTIFY COMPLETION (FAILURE) OF INITIALIZATION OPERATION
- S170 — STOP INPUTTING PULSES P / NOTIFY COMPLETION (SUCCESS) OF INITIALIZATION OPERATION

# FIG.28

```
                    ┌──────────┐
                    │  START   │
                    └────┬─────┘
                         │
         ┌───────────────▼──────────────────┐
         │  RECEIVE INITIALIZATION COMMAND   │── S110
         └───────────────┬──────────────────┘
                         │
         ┌───────────────▼──────────────────┐
         │      START INPUTTING PULSES P     │── S120
         │       IN ASCENDING ORDER          │
         └───────────────┬──────────────────┘
                         │
         ┌───────────────▼──────────────────┐
         │   OBTAIN VOLTAGE COMPONENTS V     │── S130
         └───────────────┬──────────────────┘
                         │
         ┌───────────────▼──────────────────┐
         │          CALCULATE                │── S140
         │   DIFFERENCE-DEGREE SCORE sv      │
         └───────────────┬──────────────────┘
                         │
         ┌───────────────▼──────────────────┐
         │      DETERMINE STATE OF           │── S150
         │     MOTOR-OPERATED VALVE          │
         └───────────────┬──────────────────┘
                         │
                    S160 │
              ╱──────────▼──────────╲
             ╱          IS           ╲        Y
            ╱   MOTOR-OPERATED VALVE   ╲──────────┐
            ╲    IN ROTATION RESTRICTED╱          │
             ╲      STATE Sr?         ╱           │
              ╲──────────┬──────────╱             │
                         │ N                      │
                    S180 │                        │
              ╱──────────▼──────────╲             │
          N  ╱        DOES           ╲            │
       ┌────╱  NUMBER OF INPUT PULSES P╲          │
       │    ╲    EXCEED INITIALIZATION ╱          │
       │     ╲      NUMBER Ni?        ╱           │
       │      ╲──────────┬──────────╱    S165     │
       │                 │ Y         ┌────────────▼──────────────┐
       │           S190  │           │POSITION ROTOR AT POSITION WHERE│
       │    ┌────────────▼──────────┐│MOTOR-OPERATED VALVE HAS   │
       │    │STOP INPUTTING PULSES P ││ENTERED ROTATION RESTRICTED│
       │    │                        ││STATE Sr                   │
       │    │NOTIFY COMPLETION(FAILURE)└──────────┬────────────────┘
       │    │OF INITIALIZATION OP.   │    S170     │
       │    └────────────┬──────────┘┌────────────▼──────────────┐
       │                 │           │STOP INPUTTING PULSES P     │
       │                 │           │                           │
       │                 │           │NOTIFY COMPLETION(SUCCESS) OF│
       │                 │           │INITIALIZATION OPERATION    │
       │                 │           └────────────┬───────────────┘
       │                 │                        │
       │            ┌────▼────┐                    │
       │            │   END   │◄───────────────────┘
       │            └─────────┘
```

# FIG.29

# FIG.30

# FIG.31

EP 4 753 140 A1

# FIG.32

50

## INTERNATIONAL SEARCH REPORT

| | International application No. |
|---|---|
| | **PCT/JP2024/017644** |

| A. | CLASSIFICATION OF SUBJECT MATTER |
|---|---|

***H02P 8/34***(2006.01)i; ***F16K 31/04***(2006.01)i
FI:  H02P8/34; F16K31/04 A; F16K31/04 K

According to International Patent Classification (IPC) or to both national classification and IPC

| B. | FIELDS SEARCHED |
|---|---|

Minimum documentation searched (classification system followed by classification symbols)

H02P8/34; F16K31/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | JP 7254400 B1 (FUJI KOKI KK) 10 April 2023 (2023-04-10) claim 1 | 1, 2, 6-8 |
| A | | 3-5 |
| Y | JP 7-222487 A (KABUSHIKI KAISHA TOSHIBA) 18 August 1995 (1995-08-18) abstract, claim 1, etc. | 1, 2, 6-8 |
| A | | 3-5 |
| Y | JP 2009-11143 A (DENSO CORPORATION) 15 January 2009 (2009-01-15) paragraphs [0001]-[0006], fig. 11, 12 | 1, 2, 6-8 |
| A | | 3-5 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/017644**

| Patent document cited in search report | | | Publication date (day/month/year) | Patent family member(s) | Publication date (day/month/year) |
|---|---|---|---|---|---|
| JP | 7254400 | B1 | 10 April 2023 | CN 116648841 A claim 1<br>KR 10-2024-0005068 A<br>WO 2023/053973 A1 | |
| JP | 7-222487 | A | 18 August 1995 | (Family: none) | |
| JP | 2009-11143 | A | 15 January 2009 | US 2008/0297079 A1 paragraphs [0001]-[0008], fig. 11, 12<br>DE 102008025442 A1<br>CN 101316088 A | |

Form PCT/ISA/210 (patent family annex) (July 2022)

**EP 4 753 140 A1**

**Patent documents cited in the description**

- WO 2019130928 A

- JP 7254400 B